(19) Europäisches Patentamt
European Patent Office
Office européen des brevets

(11) EP 0 935 620 B1

(12) EUROPÄISCHE PATENTSCHRIFT

(45) Veröffentlichungstag und Bekanntmachung des Hinweises auf die Patenterteilung:
**23.05.2001 Patentblatt 2001/21**

(21) Anmeldenummer: **97948870.7**

(22) Anmeldetag: **03.11.1997**

(51) Int Cl.[7]: **C08F 8/30**, C10L 1/22, C10M 133/52

(86) Internationale Anmeldenummer:
**PCT/EP97/06068**

(87) Internationale Veröffentlichungsnummer:
**WO 98/20053 (14.05.1998 Gazette 1998/19)**

# (54) POLYOLEFINE UND DEREN FUNKTIONALISIERTE DERIVATE

POLYOLEFINS AND THEIR FUNCTIONALIZED DERIVATIVES

POLYOLEFINES ET LEURS DERIVES FONCTIONNALISES

(84) Benannte Vertragsstaaten:
**AT BE CH DE DK ES FI FR GB GR IE IT LI LU NL PT SE**
Benannte Erstreckungsstaaten:
**LT LV**

(30) Priorität: **04.11.1996 DE 19645430**

(43) Veröffentlichungstag der Anmeldung:
**18.08.1999 Patentblatt 1999/33**

(73) Patentinhaber: **BASF AKTIENGESELLSCHAFT
67056 Ludwigshafen (DE)**

(72) Erfinder:
- **RATH, Hans, Peter
D-67269 Grünstadt (DE)**
- **TRÖTSCH-SCHALLER, Irene
D-67281 Bissersheim (DE)**
- **POSSELT, Dietmar
D-69120 Heidelberg (DE)**
- **GEISSLER, Bernhard
D-67281 Kirchheim (DE)**
- **MELDER, Johann-Peter
D-67141 Neuhofen (DE)**
- **RÖSCH, Joachim
D-67069 Ludwigshafen (DE)**

(74) Vertreter: **Kinzebach, Werner, Dr. et al
Ludwigsplatz 4
67059 Ludwigshafen (DE)**

(56) Entgegenhaltungen:
**EP-A- 0 490 454**
**DE-A- 4 313 088**
**DE-A- 4 330 971**
**GB-A- 961 903**
**US-A- 3 907 922**
**US-A- 5 097 087**
**US-A- 5 286 823**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft monoethylenisch ungesättigte Polyolefine und deren funktionalisierte Derivate sowie deren Verwendung als Kraft- und Schmierstoffadditive oder als Additivkonzentrate.

Vergaser und Einlaßsysteme von Ottomotoren, aber auch Einspritzsysteme für die Kraftstoffdosierung in Otto- und Dieselmotoren werden in zunehmendem Maße durch Verunreinigungen belastet. Die Verunreinigungen werden verursacht durch Staubteilchen aus der vom Motor angesaugten Luft, heiße Abgase aus dem Brennraum, die in den Vergaser geleiteten Entlüftungsgase aus dem Kurbelwellengehäuse sowie Hochsieder- und Stabilisatoren aus den Kraftstoffen.

Diese Rückstände verschieben das Luft-Kraftstoffverhältnis beim Kaltstart, im Leerlauf und im unteren Teillastbereich, so daß das Gemisch sich schlecht einstellen läßt und die Verbrennung unvollständiger wird. Als Folge davon erhöht sich der Anteil unverbrannter oder teilverbrannter Kohlenwasserstoffe im Abgas und der Benzinverbrauch steigt.

Es ist bekannt, daß zur Vermeidung dieser Nachteile Kraftstoffadditive zur Reinhaltung von Ventilen und Vergaser- bzw. Einspritzsystemen verwendet werden (vgl. z.B.: M. Rossenbeck in Katalysatoren, Tenside, Mineralöladditive, Hrsg. J. Falbe, U. Hasserodt, S. 223, G. Thieme Verlag, Stuttgart 1978). Je nach Wirkungsweise und bevorzugtem Wirkort solcher Detergens-Additive unterscheidet man heute zwei Generationen. Die erste Additiv-Generation konnte nur die Bildung von Ablagerungen im Ansaugsystem verhindern, nicht aber bereits vorhandene Ablagerungen wieder entfernen. Die Additive der zweiten Generation können dagegen Ablagerungen verhindern und beseitigen (keep-clean- und clean-up-Effekt). Dies wird insbesondere durch deren hervorragende Thermostabilität an Zonen höherer Temperatur, wie insbesondere an den Einlaßventilen, ermöglicht.

Das molekulare Bauprinzip dieser als Detergenzien wirkenden Additive der zweiten Generation beruht auf der Verknüpfung polarer Strukturen mit meist höhermolekularen, unpolaren oder oleophilen Resten. Es hat sich jedoch auch gezeigt, daß Polyolefine selber, sofern sie geeignete Molekulargewichte aufweisen, für diese Zwecke geeignet sind.

Typische Vertreter funktionalisierter Polyolefine sind die Polyalkylenamine (siehe z.B. EP-A 244 616, EP-A 476 485, EP 539 821, WO 92/12221, WO 92/14806, WO 94/24231 oder DE-PS 3611230). Ebenfalls geeignet sind Derivate dieser Amine, wie beispielsweise die β-Aminonitrile der allgemeinen Formel

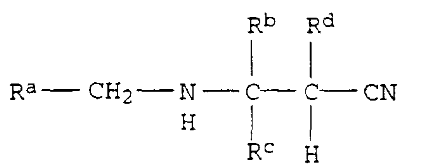

worin $R^a$ einen aliphatischen, Alkyl-Seitengruppen aufweisenden Kohlenwasserstoffrest mit einem Molekulargewicht $\bar{M}_N$ (Zahlenmittel) von 250 bis 5000 darstellt und $R^b$, $R^c$ und $R^d$ unabhängig voneinander Wasserstoff oder einen $C_1$-$C_8$-Alkylrest oder $R^b$ oder $R^d$ einen Phenylrest bedeuten. Derartige Verbindungen sind z.B, in der EP-A 568 873 beschrieben sind.

Ebenfalls geeignet sind Hydroxyl-funktionalisierte Polyolefine (siehe z.B. EP-A 277 345 und dort zitierte Literatur) sowie deren Derivate, die durch Funktionalisierung der OH-Gruppe zugänglich sind.

Eine weitere Additivklasse stellen die mit einem Polyalkylrest substituierten Bernsteinsäureanhydride bzw. deren Derivate dar (siehe z.B. DE-A 27 02 604).

Sämtliche genannten Derivate werden durch Funktionalisierung von Polyolefinen gewonnen, die noch eine reaktive Doppelbindung enthalten. Hierbei hat sich gezeigt, daß Polyolefine mit Molekulargewichten unterhalb 400 Dalton sowie deren funktionalisierte Derivate nur geringe Reinigungseffekte zeigen, wohingegen Polyolefine mit Molmassen oberhalb 1500 Dalton und deren Derivate zum Ventilstecken neigen. Eine enge Molekulargewichtsverteilung der Polyolefine, charakterisiert durch eine Dispersizität $\bar{M}_w/\bar{M}_N < 2$ (Verhältnis von gewichtsmittlerem Molekulargewicht $\bar{M}_w$ zu zahlenmittlerem Molekulargewicht $\bar{M}_N$), ist von Vorteil, da bei einer kleinen Dispersizität der höhermolekulare Bereich nicht so ausgeprägt ist.

Aus dem Stand der Technik ist bekannt, daß monoethylenisch ungesättigte Polyolefine mit Molekulargewichten von 400 bis 1500 Dalton und einer Dispersizität bis zu einer Untergrenze von 1,4 durch kationische Polymerisation hergestellt werden können. Noch engere Molekulargewichtsverteilungen ($\bar{M}_w/\bar{M}_N$: 1,2-1,4) lassen sich durch anionische Polymerisation und lebende kationische Polymerisation erreichen. Polyolefine mit einer engeren Molekulargewichtsverteilung $\bar{M}_w/\bar{M}_N < 1{,}2$ sind im Prinzip durch Destillationsverfahren zugänglich, jedoch lassen sich auf diesem Wege nur Verbindungen mit einem Molekulargewicht < 400 Dalton ($C_{28}$) gewinnen. Monoethylenisch ungesättigte Polyolefine mit Molmassen oberhalb 400 Dalton und einer Dispersizität $\bar{M}_w/\bar{M}_N < 1{,}2$ sind bislang nicht bekannt. Selbiges gilt somit für die aus ihnen erhältlichen funktionalisierten Polyolefine.

So beschreibt die US-A 5286823 monoethylenisch ungesättigte Polyisobutene mit Molmassen im Bereich von 500 bis 5000 Dalton bei einer Dispersizität $\bar{M}_w/\bar{M}_N < 2$. In den Beispielen wird eine Polyisobuten mit einem zahlenmittleren Molekulargewicht $\bar{M}_N$ = 840 Dalton mit $\bar{M}_w/\bar{M}_N$ = 1,3 offenbart.

Die US-A 5,068,490 beschreibt ein Verfahren zur Herstellung von Polyisobuten mit wenigstens 80 Mol-% Vinylidendoppelbindungen. Die erhaltenen Polyisobutene weisen zahlenmittlere Molekulargewichte im Bereich von 240 bis 2800 bei Dispersizitäten $\bar{M}_w/\bar{M}_N$ im Bereich von 1,26 bis 2,29 auf.

Die EP-A 490 454 beschreibt Propylen-Oligomere mit zahlenmittleren Molekulargewichten im Bereich von 700 bis 5000 Dalton und Dispersizitäten $\bar{M}_w/\bar{M}_N$ im Bereich von 1,5 bis 4,0.

Die US 5,097,087 beschreibt die Dimerisierung von linearen Olefinen mit einer polymeren Fluorkohlenstoff Sulfonsäure auf einem inerten Träger als Katalysator.

Die US 3,907,922 beschreibt die Herstellung reiner Dimerer durch Umsetzung einer $C_{12}$-$C_{28}$-Vinyliden Verbindung in Gegenwart eines Bortrifluorid-Komplexes eines Alkylalkohols.

Die GB 961 903 beschreibt ein Verfahren zur Herstellung von gesättigten Kohlenwasserstoffen durch zweifache Dimerisierung von 1-Olefinen mit 4-24 Kohlenstoffatomen und anschließende katalytische Hydrierung des dabei erhaltenen Tetrameren.

Der vorliegenden Erfindung liegt die Aufgabe zugrunde, monoethylenisch ungesättigte Polyolefine bereitzustellen, die Molekulargewichte im Bereich von 400 bis 1500 Dalton bei einer Dispersizität $\bar{M}_w/\bar{M}_N < 1{,}2$ aufweisen.

Es wurde nun überraschenderweise gefunden, daß monoethylenisch ungesättigte Polyolefine mit einer Dispersizität $\bar{M}_w/\bar{M}_N < 1{,}2$ durch sauer katalysierte Dimerisierung von monoethylenisch ungesättigten Oligoolefinen mit einer Dispersizität $\bar{M}_w/\bar{M}_N < 1{,}4$ erhältlich sind.

Gegenstand der vorliegenden Erfindung sind daher Polyolefine, erhalten durch katalytische Dimerisation von wenigstens einfach ungesättigten Olefin-Oligomeren, wobei es sich um Homo- oder Cooligomere von $C_3$-$C_6$-Olefinen handelt, die unter Propen, 1-Buten, i-Buten, 1-Penten, 2-Methylbuten, 1-Hexen, 2-Methylpenten, 3-Methylpenten oder 4-Methylpenten, gegebenenfalls in Kombination mit Ethylen, ausgewählt sind, und wobei das Polyolefin ein zahlenmittleres Molekulargewicht $\bar{M}_N$ im Bereich von 400 bis 1500 Dalton und eine Dispersizität $\bar{M}_w/\bar{M}_N < 1{,}2$ aufweist und wenigstens einfach ethylenisch ungesättigt ist. Erfindungsgemäß bevorzugt sind Polyolefine, die ein zahlenmittleres Molekulargewicht $\bar{M}_N$ im Bereich von 400 bis 800 Dalton aufweisen. Derartige Polyolefine werden durch Dimerisation von Olefin-Oligomeren mit zahlenmittleren Molekulargewichten im Bereich von 200 bis 400 Dalton erhalten.

Um bei den erfindungsgemäßen Polyolefinen eine Dispersizität $\bar{M}_w/\bar{M}_N < 1{,}2$ zu erreichen, ist es erforderlich, daß die kürzerkettigen Oligomere eine Dispersizität $\bar{M}_w/\bar{M}_N < 1{,}4$, vorzugsweise $\bar{M}_w/\bar{M}_N < 1{,}2$ aufweisen. Werden kürzerkettige Olefin-Oligomere mit einer Dispersizität $\bar{M}_w/\bar{M}_N < 1{,}2$ verwendet, sind Polyolefine mit einem $\bar{M}_w/\bar{M}_N < 1{,}1$ zugänglich, die erfindungsgemäß bevorzugt sind. Um die Dimerisierungsreaktion besser zu steuern, werden solche kurzkettigen Oligomere bevorzugt, worin wenigstens 50% der Doppelbindungen terminale Doppelbindungen, d.h. Vinyl- oder Vinylidendoppelbindungen sind. Besonders bevorzugt werden Oligomere mit wenigstens 60% Vinylidendoppelbindungen oder wenigstens 80% Vinyldoppelbindungen. Vorzugsweise weisen die Olefin-Oligomere nur eine Doppelbindung auf.

Kürzerkettige Oligomere fallen in der Regel als flüchtige Komponenten bei der Homo- oder Copolymerisation von $C_2$-$C_6$-Olefinen an. Sie werden in der Regel durch Abdestillieren aus dem Polymerisationsprodukten erhalten. Oligomere mit dem gewünschten hohen Gehalt an terminalen Vinyl- oder Vinylideneinheiten werden beispielsweise aus den durch kationische Polymerisation, vorzugsweise unter Verwendung von $BF_3$-haltigen Katalysatoren (vgl. DE-2702604, US-A 5,068,490, US-A 5,286,823 oder WO 85/01942), oder aus den durch metallocenkatalysierte Polymerisation hergestellten Polymerisaten gewonnen. Beispiele für derartige Polymerisationsverfahren finden sich z.B. in der DE-OS 4205932 (vinylidengruppenhaltige Polymere) oder in der EP-A 268 214 (vinylterminierte Polymere). Auf die Offenbarung der zur Polymerisation genannten Literaturstellen wird hiermit ausdrücklich Bezug genommen.

Bei den für die Dimerisierung geeigneten Katalysatoren handelt es sich in der Regel um Lewis-saure Verbindungen, wie Borhalogenide, z.B. $BCl_3$ oder $BF_3$, Aluminiumhalogenide, wie $AlCl_3$ oder Aluminiumalkylhalogenide, z. B. Alkylaluminiumdichloride, wie Ethylaluminiumdichlorid. Ebenfalls ist Fluorwasserstoff als saurer Katalysator geeignet. Die genannten Katalysatoren können alleine oder in Kombination miteinander oder in Kombination mit sogenannten Komplexbildnern wie Fluorwasserstoff, sauren Ionenaustauschern, Kieselgel, Carbonsäuren und gegebenenfalls auch anorganischen Säuren verwendet werden. Bevorzugt wird Bortrifluorid alleine oder in Kombination mit einer sauerstoffhaltigen Verbindung als saurer Katalysator eingesetzt.

Als sauerstoffhaltige Verbindungen kommen z.B. Wasser, $C_1$-$C_{20}$-Alkohole, $C_2$-$C_{10}$-Diole, $C_1$-$C_{20}$-Carbonsäuren, $C_4$-$C_{12}$-Carbonsäureanhydride sowie $C_2$-$C_{20}$-Dialkylether in Frage. Bevorzugt werden erfindungsgemäß Komplexbildner aus der Klasse der $C_1$-$C_{20}$-Alkohole oder Wasser, z. B. $C_1$-$C_8$-Alkohole und ganz besonders bevorzugt einwertige, sekundäre $C_3$-$C_{20}$-Alkohole, wie sie in der EP-A 628 575 beschrieben sind. Ganz besonders bevorzugt wird Bortrifluorid zusammen mit Isopropanol und/oder 2-Butanol verwendet. Das Molverhältnis $BF_3$:sauerstoffhaltige Verbindung hängt naturgemäß von der Komplexbindungsstärke der sauerstoffhaltigen Verbindung ab und kann vom

Fachmann auf einfache Weise ermittelt werden. Bei Verwendung von Alkoholen liegt es im Bereich von 1:2 bis 2:1, vorzugsweise 1:2 bis 1:1 und ganz besonders bevorzugt im Bereich von 1:1,7 bis 1:1,1. Bevorzugt werden Katalysatoren, in denen die Komplexe durch Adsorption an Feststoffen wie Kieselgel oder Molsieb heterogenisiert sind.

Die Durchführung der Dimerisierung kann auf übliche Weise in Batch-Fahrweise oder nach einem kontinuierlichen Verfahren erfolgen. Geht man nach der Batch-Fahrweise vor, gibt man in der Regel den Katalysator zu dem gegebenenfalls mit einem inerten Lösungsmittel verdünnten Oligomer. Geeignete Lösungsmittel sind insbesondere Kohlenwasserstoffe, vorzugsweise solche, die sich leicht destillativ entfernen lassen, beispielsweise Butan, Pentan, Cyclopentan, Hexan oder Isooctan. Verwendet man komplexe Katalysatoren, so können diese in Form ihres Komplexes oder in freier Form zu dem im Reaktionsmedium vorgelegten Komplexbildner zugegeben werden.

Die Reaktionstemperatur hängt naturgemäß vom jeweiligen Katalysator bzw. Katalysatorsystem ab. Sie liegt jedoch in der Regel im Bereich von -100°C bis +40°C, vorzugsweise im Bereich von -100°C bis 0°C. Bei Verwendung von $BF_3$-haltigen Katalysatorsystemen erfolgt die Umsetzung bei Temperaturen unterhalb 0°C, vorzugsweise unterhalb -20°C und besonders bevorzugt unterhalb -25°C. Die Reaktionsdauer liegt abhängig vom jeweils verwendeten Katalysator vorzugsweise im Bereich von 30 min bis 5 Stunden.

Vorzugsweise wird die Dimerisierung unter isothermen Bedingungen durchgeführt. Da sie exotherm verläuft, muß dann die Dimerisierungswärme abgeführt werden. Dies geschieht beispielsweise mit Hilfe einer Kühlvorrichtung, die mit flüssigem Ammoniak als Kühlmittel betrieben werden kann.

Die Aufarbeitung der Reaktion erfolgt zweckmäßigerweise durch Desaktivierung des Dimerisierungskatalysators, beispielsweise mittels Wasser, Alkoholen, Acetonitril, Ammoniak oder wäßrigen Lösungen von Mineralbasen, wie Alkalimetall- und Erdalkalimetall-Hydroxidlösungen, Lösungen von Carbonaten dieser Metalle und ähnliche. Anschließend wird in der Regel mit Wasser nachgewaschen. Nach Entfernen des Wassers werden gegebenenfalls noch flüchtige Bestandteile abdestilliert. Heterogenisierte Katalysatoren können abfiltriert und wiederverwendet werden. Etwaige Katalysator-Reste werden durch Waschen (s.o.) entfernt.

Die erhaltenen Dimerisierungsprodukte weisen zahlenmittlere Molekulargewichte im Bereich von 400 bis 1500 Dalton auf bei einer Dispersizität im Bereich von 1,0 bis 1,2. Bei Verwendung von Oligomeren mit zahlenmittleren Molekulargewichten $\overline{M}_N$ im Bereich von 200 bis 400 Dalton und einer Dispersizität $\overline{M}_W/\overline{M}_N < 1,2$ sind Oligomere mit Molmassen bis 800 Dalton bei einer Dispersizität $\overline{M}_W/\overline{M}_N < 1,1$ zugänglich. Derartige Oligomere sind für die Herstellung von Kraftstoffadditiven besonders geeignet.

Gegenstand der vorliegenden Erfindung sind außerdem funktionalisierte Polyolefine, erhältlich durch Funktionalisierung der erfindungsgemäßen Polyolefine, wobei das funktionalisierte Polyolefin folgende allgemeine Formel I besitzt:

$$R_i\text{-}X \qquad (I)$$

worin

R für den Polyolefinrest steht, i für eine ganze Zahl von 1 bis 4 und wenn i = 1,
x für eine funktionelle Gruppe der allgemeinen Formel (II)

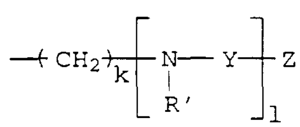 (II)

steht, worin
k und l unabhängig voneinander 0 oder 1 bedeuten,

R' für Wasserstoff, Alkyl, Hydroxyalkyl, Aminoalkyl, Cycloalkyl, Aryl, Aralkyl oder eine Gruppe -Y-Z steht,
-Y- eine Gruppe

$$-\left[Alk-O\right]_p Alk'- \quad \text{oder} \quad -\left[Alk-N(R'')\right]_p Alk'-$$

bedeutet, worin
Alk und Alk' gleich oder verschieden sind und für $C_2$-$C_4$-Alkylen stehen,
p für eine ganze Zahl von 0 bis 10 und
R" für Wasserstoff, Alkyl oder Aryl steht, und

Z ausgewählt ist unter

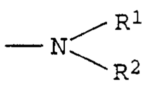 ; 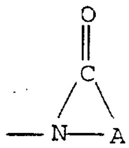 ; 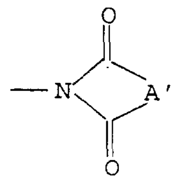 ; 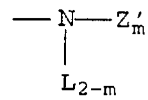

worin

$R^1$ und $R^2$ unabhängig voneinander für Wasserstoff, Alkyl, Cycloalkyl, Hydroxyalkyl, Aryl oder Aralkyl steht und sofern 1 = 0 auch für R und -$CH_2$-R stehen kann, wobei R die oben angegebene Bedeutung besitzt, oder $R^1$ und $R^2$ zusammen mit dem Stickstoffatom, an das sie gebunden sind, einen gegebenenfalls substituierten Heterocyclus bilden, der gegebenenfalls ein weiteres Heteroatom, ausgewählt unter Sauerstoff und Stickstoff, enthält,

A für $C_3$-$C_5$-Alkylen steht, das gegebenenfalls ein- oder mehrfach mit Alkyl, Cycloalkyl, Aryl, Heteroaryl, Aralkyl, oder Heteroaralkyl substituiert ist,

A' für $C_2$-$C_4$-Alkylen, $C_2$-$C_4$-Alkenylen, die beide gegebenenfalls ein- oder mehrfach mit Alkyl, Cycloalkyl, Aryl, Heteroaryl, Aralkyl oder Heteroaralkyl substituiert sind, oder o-Arylen steht,

m gleich 1 oder 2 ist,

L für Wasserstoff, Alkyl, Aryl, Aralkyl, Heteroaryl oder Heteroaralkyl steht, und

Z' ausgewählt ist unter

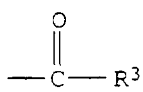 ; 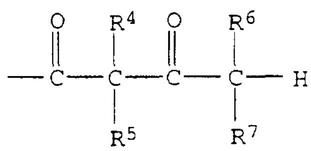 ;

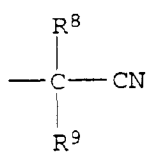 ; 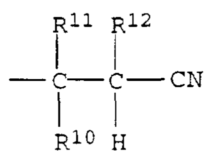 ; $-\left[Alk''-O\right]_q-E$

worin
$R^3$-$R^{12}$ unabhängig voneinander für Wasserstoff, Alkyl, Aryl, Heteroaryl, Aralkyl oder Heteroaralkyl stehen, q für eine Zahl von 1 bis 50 steht und Alk" für $C_2$-$C_4$-Alkylen, das gegebenenfalls hydroxysubstituiert ist, und E für Wasserstoff oder ein Esteräquivalent einer aliphatischen, aromatischen oder araliphatischen Mono-, Di-, Tri- oder Tetracarbonsäure steht;

oder X für eine funktionelle Gruppe der allgemeinen Formel (III)

8

$$-CH_2-\left[O-Alk\right]_n-O-E \qquad (III)$$

steht, worin

n eine ganze Zahl von 0 bis 50 ist,
Alk eine $C_2$-$C_4$-Alkyleneinheit bedeutet und
E eine der obengenannten Bedeutungen besitzt;

oder X für eine funktionelle Gruppe der allgemeinen Formel (IIIb)

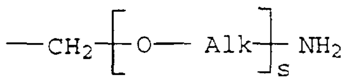

(IIIb)

steht, worin Alk die zuvor genannte Bedeutung besitzt und s für eine Zahl von 1 bis 50 steht,
oder X für eine funktionelle Gruppe der allgemeinen Formel (IV)

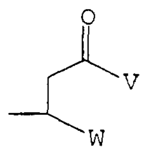

(IV)

steht, worin

- V für Alkyl, Aryl, Aralkyl, -O-$R^{13}$ oder -$NR^{14}R^{15}$ steht und $R^{13}$ bis $R^{15}$ unabhängig voneinander Wasserstoff, Alkyl, das gegebenenfalls auch durch ein oder mehrere, nicht benachbarte Sauerstoffatome unterbrochen ist und/oder auch $NH_2$- oder OH-Gruppen aufweisen kann, Cycloalkyl, Aryl, Aralkyl, Heteroaryl oder Heteroaralkyl bedeuten können,
- W für Wasserstoff, Alkyl, Cycloalkyl, Aryl, Aralkyl, Heteroaryl oder Heteroaralkyl, Alkylcarbonyl, Alkyloxycarbonyl, oder Alkylaminocarbonyl stehen kann oder V und W gemeinsam mit der Carbonylfunktion an V eine Gruppe

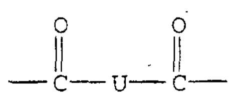

bilden, worin

- U für Sauerstoff oder $NR^{16}$ steht, wobei $R^{16}$ die für $R^{13}$-$R^{15}$ angegebenen Bedeutungen aufweisen kann;

oder wenn i für eine Zahl von 2 bis 4 steht X für eine Gruppe der allgemeinen Formel (V)

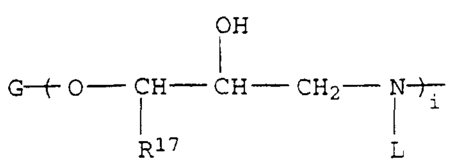

(V)

steht, worin G sich von einem di-, tri- oder tetravalenten aliphatischen Rest ableitet, L die obengenannte Bedeutung besitzt und $R^{17}$ für Wasserstoff oder $C_1$-$C_4$-Alkyl steht.

Im folgenden versteht man unter Alkyl lineare oder verzweigte, gesättigte Kohlenstoffketten mit vorzugsweise 1 bis 10 Kohlenstoffatomen. Beispielsweise können folgende Reste genannt werden: Niedrigalkylreste, d.h. $C_1$-$C_6$-Alkylreste, wie Methyl, Ethyl, n-Propyl, i-Propyl, n-Butyl, s-Butyl, i-Butyl, t-Butyl, n-Pentyl, s-Pentyl, i-Pentyl, n-Hexyl, 1-, 2- oder 3-Methylpentyl; längerkettige Alkylreste, wie Heptyl, Octyl, 2-Ethylhexyl, Nonyl und Decyl.

Unter Alkoxy bzw. Alkyloxy versteht man Alkylgruppen, die über ein Sauerstoffatom gebunden sind. Entsprechend stehen Alkylamino bzw. Alkylcarbonyl für Alkylgruppen, die über ein Stickstoffatom oder eine Carbonylfunktion gebunden sind.

Unter Aminoalkyl oder Hydroxyalkyl versteht man Alkylgruppen wie oben definiert, die eine Aminogruppe

oder Hydroxygruppe, vorzugsweise an einem terminalen Kohlenstoffatom aufweisen.

Mit Cycloalkyl sind vorzugsweise $C_3$-$C_8$-Cycloalkylreste gemeint, insbesondere Cyclopentyl oder Cyclohexyl, die gegebenenfalls mit $C_1$-$C_4$-Alkyl oder $C_1$-$C_4$-Alkoxy substituiert sind. Mit Alkylen sind vorzugsweise 1,2-, 1,3- oder 1,4-Alkyleneinheiten gemeint, z.B. 1,2-Ethylen, 1,2-Propylen, 1,2-Butylen, 1,3-Propylen, 1,4-Propylen, 1-Methylpropylen, 1,2-Pentylen oder 1,2-Hexylen.

Unter Aryl ist vorzugsweise Phenyl oder Naphthyl zu verstehen, das gegebenenfalls 1, 2, 3 oder 4 Substituenten trägt.

Bei den Heteroarylgruppen handelt es sich vorzugsweise um 5- oder 6-gliedrige aromatische Ringsysteme, die 1 bis 4 Heteroatome, ausgewählt unter O, S und N, enthalten wie z.B. Furyl, Pyrrolyl, Imidazolyl, Pyrazolyl, Oxazolyl, Isoxazolyl, Oxydiazolyl, Tetraazolyl, Pyridyl, Pyrimidyl, Pyrazinyl, Pyradizinyl, Triazinyl, Tetrazinyl und dergleichen.

Unter Aralkyl sind Arylgruppen zu verstehen, die über eine $C_1$-$C_6$-Alkyleneinheit gebunden sind, z.B. Benzyl oder Phenethyl. Selbiges gilt für Heteroaralkyl. Geeignete Substituenten sind $C_1$-$C_6$-Alkyl, $C_1$-$C_6$-Alkyloxy, $C_2$-$C_6$-Alkenyl, $C_1$-$C_6$-Alkanoyl bzw. Alkylcarbonyl, wie z.B. Acetyl und Propionyl, sowie Hydroxy, das gegebenenfalls auch ethoxyliert sein kann, Hydroxyalkyl, Aminoalkyl, Nitro, Carboxyl und Amino.

Funktionalisierte Polyolefine der allgemeinen Formel (I), worin X für einen allgemeinen Rest der Formel (II) mit k = 1 steht, sind durch Hydroformylierung der monoethylenisch ungesättigten Homo- und Copolymere und nachfolgende reduktive Aminierung der durch die Hydroformylierung erhaltenen Aldehydfunktion, d.h. durch Umsetzung mit Ammoniak, einem primären oder einem sekundären Amin in Gegenwart von Wasserstoff und einem Hydrierkatalysator, zugänglich. Hierbei werden Verbindungen der allgemeinen Formel (VI)

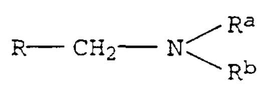

(VI)

erhalten, worin $R^a$ und $R^b$ unabhängig voneinander für Wasserstoff, Alkyl, das gegebenenfalls durch ein oder mehrere nicht miteinander benachbarten Aminogruppen oder Sauerstoffatomen unterbrochen ist, Cycloalkyl, das gegebenenfalls auch Heteroatome wie N oder O im Ring aufweisen kann, Aryl, Aralkyl, Heteroaryl, Heteroaralkyl oder $CH_2$-R steht, wobei R sich von besagtem Polyolefin ableitet.

Geeignete Amine umfassen neben Ammoniak Mono- und Di-$C_1$-$C_{10}$-alkylamine wie Mono- und Dimethylamin, Mono- und Diethylamin, Mono- und Di-n-propylamin, Mono- und Di-n-butylamin, Mono- und Di-sekbutylamin, Mono- und Di-n-pentylamin, Mono- und Di-2-pentylamin, Mono- und Di-n-hexylamin etc. Als Amine kommen weiterhin Diamine, wie Ethylendiamin, Propylen-1,2-diamin, Propylen-1,3-diamin, Butylendiamine sowie die Mono-, Di- und Trialkylderivate dieser Amine in Frage. Ebenso können Polyalkylenpolyamine verwendet werden, deren Alkylenreste 2 bis 6 C-Atome aufweisen, wie Diethylentriamin, Triethylentetramin und Tetraethylenpentamin. Ebenfalls geeignet sind Mono- oder Dialkylamine, in denen die Alkylreste gegebenenfalls durch ein oder mehrere, nicht benachbarte Sauerstoffatome unterbrochen sind und die gegebenenfalls auch Hydroxygruppen aufweisen können. Hierzu zählen z.B. 4,7-Dioxadecan-1,10-diamin, Ethanolamin, 3-Aminopropanol, 2-(2-Aminoethoxy)ethanol und N-(2-Aminoethyl)ethanolamin. Ferner können auch cyclische Amine wie Pyrrolidin, Piperidin, Piperazin oder Morpholin sowie substituierte Derivate davon, wie N-Amino-$C_1$-$C_6$-alkylpiperazine, verwendet werden. Weiterhin können auch Aryl-, Aralkyl-, Heteroaryl- oder Heteroaralkylamine verwendet werden. Derartige Herstellungsverfahren sind dem Fachmann bekannt und z.B. in der EP-A 244 616, DE-A 3611230 oder WO 94/24231 beschrieben.

Enthalten die Verbindungen der allgemeinen Formel (VI) noch primäre oder sekundäre Aminofunktionen, so können diese nach den üblichen Methoden der organischen Chemie weiter derivatisiert werden. Handelt es sich beispielsweise um Verbindungen mit primären Aminofunktionen (Verbindung (IIa)), so können diese mit Lactonen der allgemeinen Formel (IX) umgesetzt werden, wobei Verbindungen der allgemeinen Formel (IIb) erhalten werden.

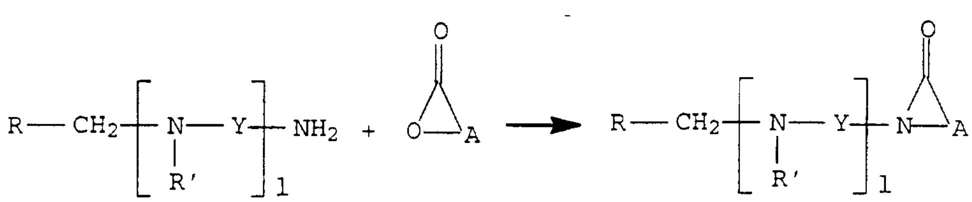

(IIa) (IX) (IIb)

In Formel (IX) und (IIb) steht A für $C_3$-$C_5$-Alkylen, das gegebenenfalls 1 bis 5 Substituenten aufweisen kann. R, R', Y und 1 weisen dabei die obengenannten Bedeutungen auf.

Derartige Lactone sind bekannt und können beispielsweise ausgehend von cyclischen Ketonen durch Bayer-Villiger-Oxidation hergestellt werden. Vorzugsweise verwendet man γ-, δ- oder ε-Lactone, wie z.B. γ-Butyrolacton, γ- oder δ-Valerolacton oder ε-Caprolacton sowie die ein- oder mehrfach substituierten Analoga davon. Die Umsetzung erfolgt vorzugsweise so, daß man das aminofunktionalisierte Polyolefin der Formel (IIa) in Substanz oder in einem geeigneten Lösungsmittel, beispielsweise Tetrahydrofuran oder in einem anderen inerten Lösungsmittel, in herkömmlicher Weise bei erhöhter Temperatur, z.B. im Bereich von 200 bis 320°C und erhöhtem Druck, wie z.B. 50 bis 300 bar mit dem Lacton (IX) umsetzt, und das gebildete Produkt unter Abtrennung des bei der Reaktion gebildeten Wassers und gegebenenfalls des nicht umgesetzten Lactons gewinnt. Werden Gemische von Lactonen der allgemeinen Formel (IX) eingesetzt, so können die erfindungsgemäßen Verbindungen der allgemeinen Formel (IIb) gleichzeitig verschiedene cyclische Endgruppen enthalten.

Auf ähnliche Weise kann die Herstellung der cyclischen Imide mit der allgemeinen Formel (IIc) erfolgen. Derartige Umsetzungen sind dem Fachmann im Prinzip bekannt und beispielsweise in J. March (Advanced Organic Chemistry 3rd. ed., J. Wiley, New York, S. 371 ff und dort zitierte Literatur) beschrieben.

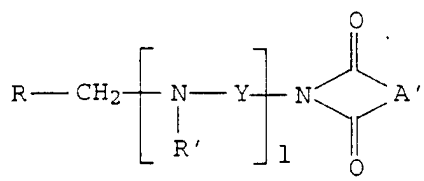

(IIc)

Als Ausgangsmaterialien dienen hierbei ebenfalls primäre Amine der allgemeinen Formel (IIa) (s.o.). Diese werden mit geeigneten cyclischen Dicarbonsäureanhydriden oder den Dicarbonsäuren selber umgesetzt. Geeignete Dicarbonsäuren, bzw. Dicarbonsäureanhydride sind Bernsteinsäureanhydrid, Maleinsäureanhydrid oder Phthalsäureanhydrid, sowie deren substituierte Analoga.

Die Herstellung von Verbindungen der allgemeinen Formel (IId), worin R, R', Y, l, L, m und Z' die oben angegebenen Bedeutungen besitzen, erfolgt in der Regel durch Funktionalisierung der primären oder sekundären Aminofunktionen in Verbindungen der allgemeinen Formel (X). Verbindungen (X), die für m = 2 den primären Aminen (IIa) entsprechen, lassen sich ebenso wie diese durch Hydroformylierung und nachfolgende reduktive Aminierung herstellen (siehe oben).

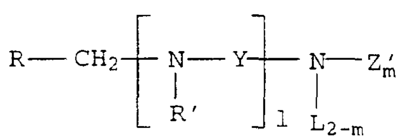

(IId)

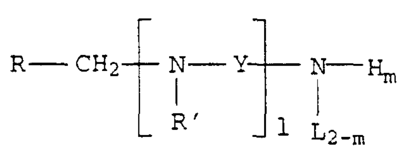

(X)

Verbindungen der allgemeinen Formel (IId), worin Z' für

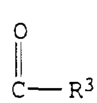

steht und $R^3$ die oben angegebenen Bedeutungen aufweist, können nach den üblichen Methoden der Acylierung von primären oder sekundären Aminofunktionen hergestellt werden (siehe J. March, Advanced Organic Chemistry, $3^{rd}$ edition, J. Wiley 1985, S. 370 ff und dort zitierte Literatur). Verbindungen der allgemeinen Formel (IId), worin Z' für eine Formylgruppe steht ($R^3$ = H), können durch Umsetzung von primären oder sekundären Aminen der allgemeinen Formel

(X) mit Kohlenmonoxid oder einem Ameisensäurealkylester in Gegenwart von Alkalimetallalkoholaten hergestellt werden. Vorzugsweise verwendet man Natrium- oder Kaliumalkoholate, insbesondere Alkalimetallmethylate. Ganz besonders bevorzugt ist Natriummethylat.

Die Umsetzung des Amins der Formel (X) mit Kohlenmonoxid erfolgt vorzugsweise nach Einstellung folgender Parameter:

- Kohlenmonoxid wird in der Reaktion im Überschuß eingesetzt. Dabei wird das Verhältnis von Kohlenmonoxid zum Amin über den Partialdruck des Kohlenmonoxids eingestellt.
- Das molare Verhältnis des Amins (X) zum katalytisch aktiven Alkalimetallalkoholat beträgt in Regel etwa 20000:1 bis etwa 1000:1, vorzugsweise etwa 12000:1 bis etwa 5000:1.
- Die Reaktion wird in Gegenwart eines Alkohols durchgeführt. Bei diesen Alkoholen handelt es sich in der Regel um primäre aliphatische $C_1$-$C_{10}$-Alkohole wie Methanol, Ethanol, i-Propanol, n-Butanol, n-Pentanol und dergleichen, vorzugsweise um Methanol oder Ethanol und insbesondere um Methanol.
- Die Reaktion kann in einem von obigen Alkoholen verschiedenen Lösungsmittel ausgeführt werden. Als Lösungsmittel können z.B. genannt werden: Kohlenwasserstoffe, wie Hexan, Cyclohexan, $C_5$ bis $C_{20}$-, wie z.B. $C_{10}$ bis $C_{13}$-, Kohlenwasserstoffgemische (beispielsweise Mihagol), und dergleichen. Die Menge des Lösungsmittels liegt im allgemeinen bei etwa 10 bis 90 Gew.-% bezogen auf den Gesamtansatz.
- Die Reaktion wird bei Temperaturen von etwa 10 bis etwa 200°C, vorzugsweise bei etwa 20 bis etwa 100°C durchgeführt. Der Reaktionsdruck beträgt etwa 10 bis etwa 200 bar, vorzugsweise etwa 20 bis etwa 100 bar. Die Reaktionszeiten betragen im allgemeinen etwa 0,1 bis 5 Stunden.

Zur Durchführung der Reaktionen werden die Reaktionspartner vermischt und anschließend unter CO-Druck auf die Reaktionstemperatur gebracht. Die Aufarbeitung kann in an sich bekannter Weise durch Abtrennung des Katalysators, Abdestillieren des Lösungsmittels sowie gegebenenfalls chromatographische oder destillative Reinigung des Reaktionsproduktes erfolgen.

Im Falle der Umsetzung des Amins der Formel (X) mit einem Ameisensäureester gelten vorzugsweise folgende Parameter.

- Als Ameisensäureester werden Ameisensäurealkylester verwendet. Bevorzugt werden $C_1$-$C_6$-Alkylester, wie z.B. Ameisensäuremethylester und Ameisensäureethylester verwendet; besonders bevorzugt ist der Ameisensäuremethylester (Methylformiat).
- Das molare Verhältnis von Ameisensäurealkylester, wie z.B. Methylformiat, zum Amin (X) beträgt in der Regel etwa 10 : 1 bis etwa 1 : 1. Vorzugsweise wird der Ester im Überschuß eingesetzt, z.B. in einem Verhältnis von etwa 3:1 bis etwa 1,3:1.
- Die Reaktion kann in einem Lösungsmittel, wie z.B. in einem der oben genannten Lösungsmittel wie Hexan, Cyclohexan, $C_5$ bis $C_{20}$-, wie z.B. $C_{10}$ bis $C_{13}$-, Kohlenwasserstoffgemische (beispielsweise Mihagol) und dergleichen, ausgeführt werden. Die Menge des Lösungsmittels liegt im allgemeinen bei etwa 10 bis 90 Gew.-% bezogen auf den Gesamtansatz.
- Die Reaktion wird bei Temperaturen von etwa 10 bis etwa 200°C, vorzugsweise bei etwa 20 bis etwa 100°C durchgeführt. Der Reaktionsdruck ist der Eigendruck der Reaktionsmischung bei der gewählten Temperatur. Sollte ein höherer Druck als der Eigendruck der Mischung erwünscht sein, so kann zusätzlich ein Inertgas, wie z.B. Stickstoff, aufgepreßt werden. Die Reaktionszeiten betragen im allgemeinen etwa 0,1 bis etwa 5 Stunden.

Zur Durchführung der Reaktionen werden die Reaktionspartner vermischt und anschließend auf die Reaktionstemperatur gebracht. Die Aufarbeitung kann in an sich bekannter Weise durch Abdestillieren der leichtsiedenden Bestandteile sowie gegebenenfalls durch chromatographische oder destillative Reinigung des Reaktionsproduktes erfolgen.

Steht Z' in Formel (IId) für eine Gruppe

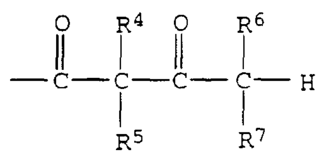

worin $R^4$-$R^7$ die oben angegebenen Bedeutungen besitzen, sind die erfindungsgemäßen funktionalisierten Polyolefine durch Umsetzung der primären oder sekundären Amine der allgemeinen Formel (X) mit Diketenen der allgemeinen

Formel (XI) erhältlich.

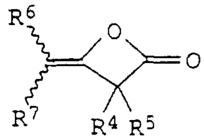

(XI)

Die Herstellung erfolgt in an sich bekannter Weise, indem man das Amin (X) in Substanz oder in einem inerten Lösungsmittel, unter Kühlung, bei Raumtemperatur oder aber auch bei erhöhter Temperatur - je nach Reaktivität der Reaktionspartner mit dem Diketen (XI) umsetzt. Beispiele für geeignete Lösungsmittel umfassen schwefel- und chlorfreie Lösungsmittel, wie höher siedende Kohlenwasserstoffe, z.B. n-Hexan, n-Octan, n-Decan oder Isododecan, oder dipolar aprotische Lösungsmittel, wie wasserfreies Tetrahydrofuran. Vorzugsweise löst man Verbindung (X) in einem geeigneten Lösungsmittel und gibt das Diketen (XI), gegebenenfalls gelöst in dem gleichen Lösungsmittel, tropfenweise unter Rühren hinzu. Die erhaltenen Reaktionsprodukte können, gegebenenfalls nach Abdestillieren des Lösungsmittels oder Entfernen überflüssiger Reagenzien, ohne weitere Reinigung verwendet werden.

Zu den erfindungsgemäßen funktionalisierten Polyolefinen zählen ebenfalls Verbindungen der allgemeinen Formel (IId), worin Z' für eine Gruppe

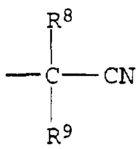

steht, und $R^8$ und $R^9$ die oben angegebenen Bedeutungen besitzen. Derartige Verbindungen sind durch Funktionalisierung der Aminogruppe in (X) im Sinne einer Cyanmethylierung zugänglich.

Die Cyanmethylierung erfolgt durch Umsetzung eines Polyalkylamins der allgemeinen Formel (X) mit Blausäure oder einem Salz davon und mindestens einem Keton $R^8$-C(O)-$R^9$, worin $R^8$ und $R^9$ die oben angegebenen Bedeutungen besitzen. Die Umsetzung wird in der Regel in Gegenwart eines Phasentransfer-Katalysators durchgeführt.

Geeignete Phasentransfer-Katalysatoren umfassen quaternäre Ammonium- und Phosphoniumsalze, wobei jedoch quaternäre Ammoniumsalze bevorzugt sind. Beispiele für geeignete Phasentransfer-Katalysatoren sind Benzyltriethylammoniumchlorid, Tetrabutylammoniumbromid, Methyltricaprylammoniumchlorid und Methyltributylammoniumchlorid sowie die entsprechenden halogenfreien Formen dieser Verbindungen. Die Umsetzung erfolgt in der Regel bei Temperaturen im Bereich von Raumtemperatur bis 100°C, vorzugsweise 40 bis 80°C.

Die Umsetzung des Amins (X) erfolgt in Wasser oder polaren organischen Lösungsmitteln, wie Alkoholen oder cyclischen Ethern, z.B. Tetrahydrofuran, oder Mischungen davon. Vorzugsweise wird das Amin (X) zusammen mit dem Phasentransfer-Katalysator in einem polaren organischen Lösungsmittel, gegebenenfalls zusammen mit Wasser, vorgelegt und hierzu die Blausäure oder eine wäßrige Lösung des geeigneten Alkali- oder Erdalkalimetallcyanids und das Keton oder der Aldehyd, gegebenenfalls als Lösung in einem organischen Lösungsmittel oder Wasser oder Mischungen davon, zugetropft. Nach Entfernen des Phasentransfer-Katalysators durch Waschen mit Wasser und Entfernen des Lösungsmittels bleibt das cyanalkylierte Produkt in einer Form zurück, die direkt eingesetzt werden kann.

Additive der allgemeinen Formel (IId), worin Z' für

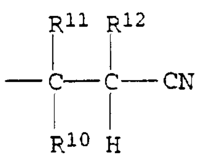

steht, und $R^{10}$ bis $R^{12}$ die obengenannten Bedeutungen aufweisen, können nach den in der EP-A 568 873 beschriebenen Verfahren, auf die hier im vollen Umfange Bezug genommen wird, auf dem Wege der Cyanethylierung, d.h. Umsetzung des primären oder sekundären Amins (X) mit einem α,β-ungesättigten Nitril, hergestellt werden.

Additive der allgemeinen Formel (IId), worin Z' für eine Gruppe der allgemeinen Formel

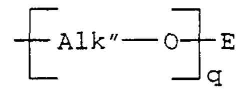

steht, Alk", q und E die obengenannten Bedeutungen besitzen, sind durch Alkoxylierung von Aminen der allgemeinen Formel X mit Oxiranen, vorzugsweise mit Ethylenoxid, 1,2-Propylenoxid oder 1,2-Butylenoxid zugänglich. Die auf diesem Wege erhältlichen Alkohole der allgemeinen Formel (VIIa)

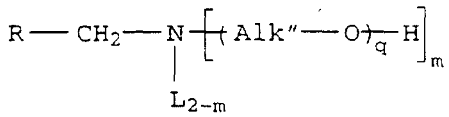

(VIIa)

können anschließend mit geeigneten Carbonsäuren oder Carbonsäurederivaten zu den Estern der allgemeinen Formel (VII),

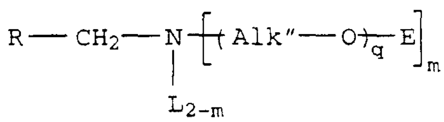

(VII)

worin R, Alk", L, m und q die zuvor genannten Bedeutungen besitzen und E für das Esteräquivalent einer aliphatischen, aromatischen oder araliphatischen Mono-, Di-, Tri- oder Tetracarbonsäure steht, verestert werden. Geeignete Veresterungskomponenten sind Mono- und Dicarbonsäuren sowie ihre Anhydride oder Säurechloride, weiterhin Tri- und Tetracarbonsäuren. Geeignete Carbonsäuren umfassen vorzugsweise Essigsäure, Propionsäure, Ethylhexansäure, Benzoesäure, 2-Phenylessigsäure, Isononansäure, Bernsteinsäure, Adipinsäure, Maleinsäure, Phthalsäure, Terephthalsäure, Isophthalsäure, Zitronensäure, Trimellithsäure, Trimesinsäure, Pyromellithsäure oder Butantetracarbonsäure. Die Di- oder Polycarbonsäuren können teilweise oder vollständig mit den Alkoholen (VIIa) verestert werden. Vorzugsweise werden sie jedoch nur teilweise mit den Alkoholen (VIIa) verestert. Die freien Carboxylfunktionen können mit Ammoniak, primären oder sekundären Aminen umgesetzt werden. Die hierbei erhältlichen Ammoniumsalze, Amide, Imide oder Aminocarbonsäuren weisen ebenfalls hervorragende Dispergiereigenschaften auf und sind somit als Kraft- und Schmierstoffadditive geeignet. Bevorzugt werden Verbindungen der allgemeinen Formel (VII), worin Alk" für 1,2-Ethylen, 1,2- bzw. 1,3-Propylen oder 1,2- bzw. 3,4-Butylen steht, und darunter besonders bevorzugt die Alkohole (VIIa). L steht vorzugsweise für Wasserstoff oder $C_1$-$C_6$-Alkyl und m für 1. Besonders bevorzugt werden Verbindungen der allgemeinen Formel (VII) bzw. (VIIa), worin q so gewählt ist, daß ihr zahlenmittleres Molekulargewicht $M_n$ im Bereich von 1000 bis 3000 Dalton liegt. Die Herstellung derartiger Verbindungen kann nach den üblichen Methoden der Alkoxylierung von Polyalkenylaminen erfolgen, wie sie z.B. in der EP-A 244 616 beschrieben sind.

Aminofunktionalisierte Polyolefine der allgemeinen Formel (XII),

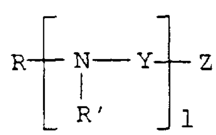

(XII)

worin R, R', Y, Z und l die oben angegebenen Bedeutungen besitzen, und die sich von den auf dem Wege der Hydroformylierung/reduktive Aminierung gewonnenen Aminen der allgemeinen Formel (VI) um eine $CH_2$-Gruppe unterscheiden, sind ebenfalls Gegenstand der vorliegenden Erfindung. Ihre Herstellung kann auf zwei unterschiedlichen Wegen erfolgen.

So ist es bekannt, daß die Doppelbindung ethylenisch ungesättigter Polyolefine epoxidiert werden kann. Die so erhältlichen oxyranfunktionalisierten Polyolefine lassen sich mit Ammoniak, primären oder sekundären Aminen zu Aminoalkoholen öffnen (vgl. z.B. WO 92/12221, WO 92/14806, EP-A 476 485 sowie EP 539 821). Die auf diesem Wege erhältlichen Aminoalkohole lassen sich katalytisch dehydratisieren. Anschließend wird das gebildete Enamin zum Amin hydriert. Die Umsetzung des Epoxids zum Amin kann in getrennten Stufen erfolgen. Es ist jedoch auch möglich die Umsetzung des Epoxids zum Amin einstufig durchzuführen, indem man das Epoxid mit Ammoniak, einem

primären oder einem sekundären Amin in Gegenwart von Wasserstoff und einem Katalysator umsetzt, welcher Dehydratisierungs- und zugleich Hydrierungseigenschaften besitzt.

Erfindungsgemäß verwendbare Katalysatoren mit Dehydrierungs- und Hydrierungseigenschaften sind vorzugsweise ausgewählt unter Zeolithen oder porösen Oxiden von Al, Si, Ti, Zr, Mw, Mg und/oder Zn, sauren Ionenaustauscheren und Heteropolysäuren, welche jeweils mindestens ein Hydriermetall aufweisen. Als Hydriermetall verwendet man bevorzugt Ni, Co, Cu, Fe, Pd, Pt, Ru, Rh oder Kombinationen davon.

Erfindungsgemäß geeignete zeolithische Feststoffkatalysatoren sind beispielsweise in der EP-A 539 821 beschrieben, worauf hiermit in vollem Umfang Bezug genommen wird. Zur Optimierung von Selektivität, Umsatz und Standzeiten können die erfindungsgemäß verwendeten Zeolithe in geeigneter Weise mit weiteren Elementen dotiert werden (vgl. EP 539 821). In gleicher Weise kann eine Dotierung der Zeolithe mit oben genannten Hydriermetallen erfolgen. Die Hydriermetalle machen einen Anteil von 1 bis 10 Gew.-%, berechnet als Oxide, am Gesamtgewicht der katalytisch aktiven Masse aus.

Weitere geeignete Katalysatoren mit Dehydratisierungs- und Hydrierungseigenschaften sind vorzugsweise saure Oxide der Elemente Al, Si, Zr, Nb, Mg oder Zn oder Gemische davon, die mit wenigstens einem der oben genannten Hydriermetalle dotiert sind. Das Oxid (berechnet als $Al_2O_3$, $SiO_2$, $ZrO_2$, $Nb_2O_5$, MgO oder ZnO) ist dabei in einem Anteil von etwa 10 bis 99 Gew.-%, vorzugsweise etwa 40 bis 70 Gew.-%, in der Katalysatormasse enthalten. Das Hydriermetall (berechnet als NiO, CoO, CuO, $Fe_2O_3$, PdO, PtO, $RuO_2$ oder $Rh_2O_3$) ist dabei in einem Anteil von etwa 1 bis 90 Gew.-%, vorzugsweise etwa 30 bis 60 Gew.-%, bezogen auf das Gesamtgewicht der katalytisch aktiven Masse, enthalten. Außerdem können in den erfindungsgemäß eingesetzten Oxiden geringe Menge, d.h. etwa 0,1 bis 5 Gew.-% (berechnet für die Oxide) weitere Elemente, wie z.B. Mo oder Na enthalten sein, um Katalysatoreigenschaften, wie z.B. Selektivität und Standzeit zu verbessern. Derartige Oxide und ihre Herstellung sind beispielsweise in der EP-A 696 572 beschrieben, worauf hiermit in vollem Umfang Bezug genommen wird.

Die Umsetzung der Epoxide zu den Aminen kann sowohl kontinuierlich als auch diskontinuierlich durchgeführt werden. Die Temperaturen betragen in beiden Verfahrensvarianten etwa 80 bis 250°C, vorzugsweise etwa 150 bis 210°C. Die Reaktion erfolgt bei Wasserstoffdrücken bis etwa 600 bar, vorzugsweise etwa 80 bis 300 bar. Das Amin wird, bezogen auf das Epoxid, in einem molaren Verhältnis von etwa 1:1 bis etwa 40:1, bevorzugt in einem Überschuß von etwa 5:1 bis etwa 20:1 eingesetzt. Die Lösung kann sowohl in Substanz aber auch in Gegenwart eines Lösungsmittel (z.B. eines Kohlenwasserstoffs, wie etwa Hexan, oder Tetrahydrofuran) durchgeführt werden.

Beispiele für geeignete Amine sind neben Ammoniak, Ethylen-1,2-diamin, Propylen-1,2-diamin, Propylen-1,3-diamin, Butylendiamine, die Monoalkyl-, Dialkyl- und Trialkylderivate dieser Amine, wie z.B. N,N-Dimethylpropylen-1,3-diamin. Ferner können Polyalkylenpolyamine eingesetzt werden, deren Alkylenreste nicht mehr als 6 C-Atome aufweisen, beispielsweise Polyethylenpolyamine, wie Diethylentriamin, Triethylentetramin und Tetraethylenpentamin und Polypropylenpolyamine. Ebenfalls geeignet sind Mono- oder Dialkylamine, in denen die Alkylreste durch ein oder mehrere, nicht benachbarte Sauerstoffatome unterbrochen sind und die gegebenenfalls auch Hydroxygruppen oder weitere Aminogruppen aufweisen können wie 4,7-Dioxadecan-1,10-diamin, Ethanolamin, 3-Aminopropanol, 2-(2-Aminoethoxy)ethanol, N-(2-Aminoethyl)ethanolamin. Weitere Beispiele sind N-Amino-$C_1$-$C_6$-alkylpiperazine. Bevorzugt verwendet man Ammoniak.

Die auf diesem Wege erhältlichen Amine der allgemeinen Formel (XII), insbesondere die primären Amine (XIIa) (hier steht Z in Formel (XII) für $NH_2$ und 1 für 0), die durch Umsetzung der Oxirane mit Ammoniak erhältlich sind, können nach den oben beschriebenen Methoden weiter funktionalisiert werden.

$$R—NH_2 \qquad \text{(XIIa)}$$

Der zweite Weg zu aminofunktionalisierten Polyalkenen der Formel (XII) besteht in der Umsetzung der monoethylenisch ungesättigten Polyalkene im Sinne einer Ritter-Reaktion. Hierunter ist die Umsetzung von Olefinen mit HCN oder Nitrilen unter saurer Katalyse zu verstehen. Die Reaktion verläuft über die Formamid bzw. Acylderivate, die anschließend zu den primären Aminen der allgemeinen Formel (XIIa), worin R die oben angegebene Bedeutung besitzt, hydrolisiert werden können. Die Ritter-Reaktion ist beschrieben in Houben-Weyl E5, S. 103-1041 (1985) bzw. Houben-Weyl, XI/1 S. 994 f. (1957). Die Herstellung von Polyalkylenaminen via Ritter-Reaktion ist beispielsweise in der DE-OS 2061057 oder der EP-A 567 810 beschrieben, auf die hier in vollem Umfang Bezug genommen wird.

Eine weitere Klasse von Schmierstoff- und Kraftstoffadditiven sind Verbindungen der allgemeinen Formel (XIII)

$$R-CH_2-\left[O-Alk\right]_n-O-E \qquad (XIII)$$

(entsprechend den Verbindungen der allgemeinen Formel I, worin X für

$$-CH_2-\left[O-Alk\right]_n-O-E$$

steht). Hierin weisen Alk, E und n die zuvor genannten Bedeutungen auf.

Eine Ausführungsform der vorliegenden Erfindung betrifft derartige Verbindungen worin n Werte von 0 bis 10 annimmt. Eine andere betrifft Verbindungen, worin n mittlere Werte von 11 bis 50, vorzugsweise 15 bis 35 annimmt. In der letztgenannten Ausführungsform steht E vorzugsweise für Wasserstoff.

Ihre Herstellung erfolgt ähnlich wie die Herstellung der aminofunktionalisierten Derivate der allgemeinen Formel (VI) ausgehend von dem Hydroformylierungsprodukt der erfindungsgemäßen Polyolefine. Dieses wird anschließend unter Wasserstoffüberschuß zu dem entsprechenden Alkohol der allgemeinen Formel (VIIIa) hydriert. Derartige Verfahren sind z.B. in der EP-A 277 345 beschrieben, auf die hier in vollem Umfang Bezug genommen wird. Die auf diesem Wege erhältlichen Alkohole der allgemeinen Formel (VIIIa),

$$R-CH_2-OH \qquad (VIIIa)$$

worin R die obengenannte Bedeutung besitzt, lassen sich nach bekannten Verfahren der organischen Chemie zu Verbindungen der allgemeinen Formel (XIIIa),

$$R-CH_2-\left[O-Alk\right]_n-OH \qquad (XIIIa)$$

worin R, Alk und n die obengenannte Bedeutung besitzen, alkoxylieren und/oder zu Verbindungen der allgemeinen Formel (XIII) bzw. (VIII) verestern.

$$R-CH_2-O-E \qquad (VIII)$$

$$R-CH_2-\left[O-Alk\right]_n-O-E \qquad (XIV)$$

Die Addition von Alkylenoxiden an Alkohole in Gegenwart basischer Katalysatoren ist hinlänglich bekannt. Insbesondere Ethylenoxid, Propylenoxid oder Butylenoxid sowie deren Mischungen sind technisch von Bedeutung, doch sind auch Additionen von Verbindungen wie Cyclohexenoxid denkbar. Derartige Alkoxilierungsreaktionen können auch an den Rohprodukten einer Hydroformulierung durchgeführt werden, da bei der Hydroformulierung die Alkohole VIIIa bereits in merklichem Umfang gebildet werden, und die Aldehyde R-CHO im Sinne einer Cunnizarro-Reaktion in den Alkohol VIIIa und das Carbonsäure-Salz $R\text{-}CO_2M$, worin M für das Kation des üblicherweise verwendeten, basischen Alkoxilierungskatalysators steht, disproportionieren. Geeignete Kraftstoff- bzw. Schmierstoffadditive sind auch die Ester der Alkohole (VIIIa) sowie ihrer Alkoxylierungsprodukte (XIIIa). Geeignete Veresterungskomponenten sind Mono- und Dicarbonsäuren sowie ihre Anhydride oder Säurechloride, weiterhin Tri- und Tetracarbonsäuren. Geeignete Mono- oder Polycarbonsäuren umfassen Essigsäure, Propionsäure, Ethylhexansäure, Isononansäure, Bernsteinsäure, Adipinsäure, Maleinsäure, Phthalsäure, Terephthalsäure, Zitronensäure, Trimellithsäure, Trimesinsäure, Pyromellithsäure oder Butantetracarbonsäure.

Die Di- oder Polycarbonsäuren können teilweise oder vollständig verestert werden, vorzugsweise werden sie

jedoch nur teilweise mit den Alkoholen der allgemeinen Formel (VIIIa) bzw. (XIIIa) verestert. Die freien Carbonsäurefunktionen können mit Ammoniak oder primären oder sekundären Aminen umgesetzt werden. Die hierbei erhältlichen Ammoniumsalze, Amide, Imide oder Aminosäuren weisen ebenfalls hervorragende Dispergiereigenschaften auf und sind somit als Kraftstoff- und Schmierstoffadditive ebenfalls geeignet.

Eng mit dieser Klasse verwandt sind die Amine der allgemeinen Formel (XIVb)

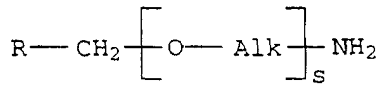 (XIVb)

worin R die oben genannte Bedeutung besitzt, s für eine Zahl im Bereich von 1 bis 50, vorzugsweise 10 bis 40, steht und Alk die oben genannte Bedeutung besitzt und vorzugsweise für 1,2-Ethylen oder 1,2-Propylen steht. Derartige Amine XIVb sind beispielsweise ausgehend von den Alkoholen VIIIa bzw. den Aldehyden R-CHO durch Alkoxylierung in Gegenwart basischer Katalysatoren, z. B. Alkalimetallhydroxiden wie Natriumhydroxid oder Kaliumhydroxid, oder Erdalkalimetalloxiden wie Bariumoxid über die Alkoxilierungsprodukte der allgemeinen Formel R-$CH_2$-[O-Alk]$_s$-OH, worin R, Alk und s die oben genannten Bedeutungen besitzen, und nachfolgende Umsetzung mit Ammoniak/Wasserstoff in Gegenwart von Hydrierkatalysatoren wie Raney-Nickel oder Raney-Cobalt unter erhöhtem Druck, z. B. 100 bis 300 bar, und erhöhter Temperatur, z. B. 100 bis 300 °C, erhältlich.

Eine dritte Klasse erfindungsgemäßer, funktionalisierter Polyolefine sind Verbindungen der allgemeinen Formel (XIV), worin R, V und W die oben genannten Bedeutungen besitzen. Bevorzugt werden Bernsteinsäure-Derivate der allgemeinen Formel (XV), worin U für Sauerstoff oder $NR^{16}$ steht und $R^{16}$ die obengenannten Bedeutungen besitzt. Besonders bevorzugt steht U für $NR^{16}$.

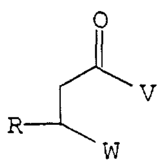 (XIV) , 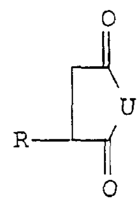 (XV)

Derartige Verbindungen werden durch Umsetzung der monoethylenisch ungesättigten Polyalkene mit α,β-ungesättigten Carbonylverbindungen der allgemeinen Formel (XVI)

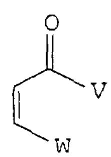 (XVI)

im Sinne einer Enreaktion, erhalten. Vorzugsweise handelt es sich bei den Verbindungen der allgemeinen Formel (XVI) um Maleinsäureanhydrid, das nachträglich mit einem primären Amin der allgemeinen Formel $H_2NR^{16}$ oder einem Alkohol funktionalisiert wird. Derartige Verfahren sind dem Fachmann bekannt und beispielsweise in der DE-A 2702604 beschrieben.

Eine vierte Klasse erfindungsgemäßer funktionalisierter Polyolefine sind Verbindungen der allgemeinen Formel I, worin i für eine Zahl von 2 bis 4 und X für eine Gruppe der allgemeinen Formel (V)

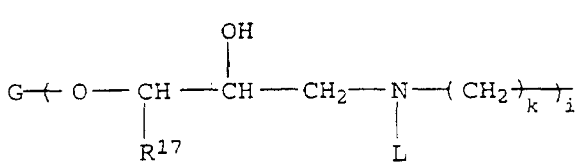 (V)

steht, worin G sich von einem di-, tri- oder tetravalenten aliphatischen Rest ableitet, L und k die obengenannten Bedeutugen besitzen und $R^{17}$ für Wasserstoff, Alkyl, Aryl, Aralkyl oder Heteroaryl, vorzugsweise jedoch für Wasserstoff,

steht. Vorzugsweise steht L ebenfalls für Wasserstoff.

Derartige Verbindungen lassen sich durch Umsetzung der erfindungsgemäßen Amine der allgemeinen Formel (X) (s.o.) oder (XVII) (Formel (XVII) entspricht Formel (XII) mit Z' = $NH_mL_{2-m}$, worin L und m die obengenannten Bedeutungen besitzen) mit Glycidylethern der allgemeinen Formel (XVIII)

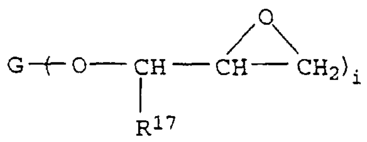 (XVIII)

worin $R^{17}$, G und i die obengenannten Bedeutungen besitzen, nach bekannten Verfahren herstellen. Die Glycidylether (XVIII) leiten sich formal von zwei-, drei-, vier- oder höherwertigen aliphatischen Alkoholen, wie Glykol, 1,2- oder 1,3-Propandiol, 1,2-, 1,3-oder 1,4-Butandiol, Diethylenglykol, Triethylenglykol, Glycerin, Trimethylolpropan, Mannit, Erythrit, Pentaerythrit, Arabit, Adonit, Xylit, Sorbit oder Mannit. In den Glycidylethern (XVIII) sind 2 bis 4 der OH-Gruppen der genannten Polyhydroxyverbindungen mit Glycidylgruppen verethert. In den bevorzugten Verbindungen der allgemeinen Formel (I), worin X für eine Gruppe der allgemeinen Formel (V) steht, leitet sich die allgemeine Formel (V) von 1,2-, 1,3- oder 1,4-Butandiol, Trimethylolpropan oder Pentaerythrit, in denen alle OH-Gruppen mit Glycidylgruppen verethert sind, ab. Ebenfalls geeignet sind Verbindungen der allgemeine Formel (I) mit i = 1, worin X für einen Rest

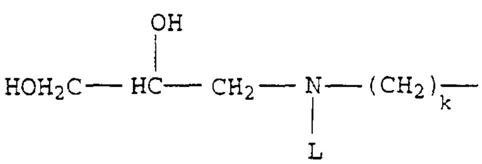

steht. Derartige Verbindungen werden durch Umsetzung von Glycidol mit den Aminen (X) bzw. (XVII) erhalten.

Die erfindungsgemäßen funktionalisierten Polyolefine der allgemeinen Formel (I) können ebenso wie die erfindungsgemäßen, nicht funktionalisierten Polyolefine als Kraftstoff- oder Schmierstoffadditive in üblicher Weise verwendet werden. Eine typische Kraftstoffzusammensetzung, wie z.B. ein Kraftstoff für Otto- und Dieselmotoren, enthält die erfindungsgemäßen Polyolefine und/Oder die Verbindungen der allgemeinen Formel (I) in Mengen von 20 bis 5000 mg/kg Kraftstoff, vorzugsweise etwa 50 bis 1000 mg/kg Kraftstoff zudosiert. Die erfindungsgemäßen Additive können gegebenenfalls auch zusammen mit anderen Additiven zugesetzt werden. Sie dienen insbesondere als Detergentien zur Reinhaltung des Kraftstoffeinlaßsystems. Derartige additivierte Kraftstoffe weisen hohe Reinigungseffekte, d.h. niedrige Ablagerungswerte an den Einlaßventilen auf.

Gegenstand der Erfindung sind weiterhin Schmierstoffzusammensetzungen, welche wenigstens ein erfindungsgemäßes funktionalisiertes Polyolefin der allgemeinen Formel (I), gemäß obiger Definition, gegebenenfalls in Kombination mit weiteren üblichen Schmierstoffzusätzen enthalten. Beispiele für übliche Zusätze sind Korrosionsinhibitoren, Verschleißschutzadditive, Viskositätsverbesserer, Detergentien, Antioxidantien, Antischaummittel, Schmierfähigkeitsverbesserer und Stockpunktsverbesserer. Die erfindungsgemäßen Verbindungen sind üblicherweise in Mengen von 0,5 bis 15 Gew.-%, vorzugsweise etwa 1 bis 10 Gew.-%, bezogen auf das Gesamtgewicht in der Schmierstoffzusammensetzung enthalten. Beispiele für erfindungsgemäß hergestellte Schmierstoffe umfassen Öle und Fette für Kraftfahrzeuge und industriell eingesetzte Antriebsaggregate, insbesondere Motorenöle, Getriebeöle und Turbinenöle.

Die im folgenden angegebenen Beispiele sollen die Erfindung verdeutlichen ohne sie jedoch einzuschränken.

Beispiele

Analytik

Die Bestimmung des zahlenmittleren Molekulargewichts $\overline{M}_N$ der Ausgangsmaterialien erfolgte durch kombinierte Gaschromatographie-Massenspektrometrie nach bekannten Verfahren. Alternativ wurden die Molmassen der Umsetzungsprodukte mittels Gelpermeationschromatographie (GPC) bestimmt: Die Diskriminierung nach Molmassen erfolgte an 5 nacheinander geschalteten Mixed-B-Säulen (l = 300 mm, d = 7,5 mm beschickt mit PL-Gel) der Fa. Polymer Laboratories. Als mobile Phase diente Tetrahydrofuran. Die Detektion erfolgte über den Berechnungsindex mit einem RI-Detektor 410 der Fa. Waters. Zur Kalibrierung wurden käufliche Polyisobuten-Standards verwendet. Die

Chromatographie wurde bei T = 35°C und einer Fließgeschwindigkeit von 1,2 ml/min durchgeführt.

Die Dimere wurden mittels Gelpermeationschromatographie (GPC) und mittels Gaschromatographie (Auswertung der Peak-Integrale) nach bekannten Verfahren hinsichtlich ihrer Molekulargewichtsverteilung charakterisiert.

Für die Berechnung wurden folgende Formeln zugrunde gelegt:

$$\bar{M}_N = \frac{\Sigma c_i}{\Sigma \frac{c_i}{M_i}}$$

$$\bar{M}_W = \frac{\Sigma c_i M_i}{\Sigma c_i}$$

Hierin steht $M_i$ für das Molekulargewicht der einzelnen Polymerspezies i und $c_i$ für die aus den Chromatogrammen erhältlichen Gewichtsteile der Polymerspezies i in dem Polymer- bzw. Oligomergemisch.

Der Anteil der Vinylidendoppelbindungen in den Ausgangsoligomeren wurde mittels $^{13}$C-NMR-Spektroskopie (100,7 MHz) anhand der charakteristischen Signale bei 114,4 und 143,6 ± 0,4 ppm (vgl. US 5,286,823) bestimmt.

Bestimmung von Funktionalisierungsausbeuten und Aminzahlen

Die Funktionalisierungsausbeute der Hydroformylierung wurde durch präparative Flüssigchromatographie ermittelt. Hierzu wurden 20 g einer Probe des Hydroformylierungsansatzes (s.u.) bei 230°C/2 mbar vom Lösungsmittel befreit, gewogen, in 20 ml Heptan aufgenommen und auf eine Kieselgelsäule (l = 1 m, d = 40 mm), deren freies Volumen mit n-Heptan gefüllt ist, aufgebracht. Man eluiert mit 2 l Heptan innerhalb 2 bis 3 Stunden, befreit das Eluat bei 230°C/2 mbar vom Lösungsmittel und wiegt zurück. Aus Rückwaage R und Einwaage E wird die Funktionalisierungsausbeute F berechnet: F = 100 (E - R)/E.

Die Aminzahlen wurden wie folgt bestimmt. Zuerst erfolgt eine Bestimmung der Gesamtaminzahl durch potentiometrische Titration mit Trifluormethansulfonsäure in Eisessig. Primäres Amin wurde durch Umsetzung mit einer 25 gew.-%igen Lösung von Acetylaceton in Pyridin derivatisiert und der Gehalt an primärem Amin durch Rücktitration mit Natriummethylatlösung bestimmt. Zur Bestimmung des tertiären Amins wurde das primäre und sekundäre Amin acetyliert und anschließend verbliebenes tertiäres Amin durch potentiometrische Titration mit Trifluormethansulfonsäure in Eisessig bestimmt. Der Gehalt an sekundärem Amin wurde durch Abzug von primärem und sekundärem Amin von der Gesamtaminzahl errechnet. Die Bestimmung von OH-Zahl, Esterzahl, Carbonylzahl und Säurezahl erfolgte nach bekannten Methoden.

Die Prüfung der erfindungsgemäßen funktionalisierten Polyolefine auf ihre Eignung als Kraftstoffadditive geschieht mit Hilfe von Motortests, die in Prüfstandversuchen mit einem 1,2 l Opel Kadett-Motor gemäß CEC-F-04-A-87 durchgeführt werden. Als Kraftstoff dient Eurosuper gemäß DIN 51607 zusammen mit Referenzöl L293.

Ausgangsmaterialien

Das verwendete Oligobuten-1-Destillat stammte aus der Polymerisation von Buten-1 via Zirkonocen-Katalyse:

Triisobutylaluminoxan wurde nach der Vorschrift in EP-A 575 356 hergestellt. 3,5 g einer Lösung von Isobutylaluminoxan in Heptan (3 Gew.-% bezogen auf Al; 3,89 mmol Al), 0,27 g Trimethylaluminium und 18 g 1-Buten wurden sukzessive in einem Reaktionsgefäß unter Inertgas vorgelegt und mit festem Biscyclopentadienylzirkon(IV)chlorid (0,32 g) versetzt. Man erwärmte 22 h auf 50°C und gab dann 10%ige Salzsäure unter Eiskühlung zu. Die organische Phase wurde abgetrennt und zur Entfernung des Lösungsmittels fraktioniert destilliert. Das Oligomer wies laut GC-MS ein zahlenmittleres Molekulargewicht $\bar{M}_N$ von 286 und eine Dispersizität $\bar{M}_w/\bar{M}_N$ von 1,07 auf (34,2 Gew.-% Tetramer, 26,5 Gew.-% Pentamer, 17,1 Gew.-% Hexamer, 11,1 Gew.-% Heptamer, 6,2 Gew.-% Octamer, 3,5 Gew.-% Nonamer, 1,4 Gew.-% Decamer).

Das verwendete Destillat der Propenoligomerisierung wurde analog dem 1-Buten-Oligomer gewonnen. Das zahlenmittlere Molekulargewicht nach GC-MS lag bei $\bar{M}_N$ = 290, die Dispersizität $\bar{M}_w/\bar{M}_N$lag bei 1,02 (0,2 Gew.-% Pentamer, 45 Gew.-% Hexamer, 31 Gew.-% Heptamer, 14,4 Gew.-% Octamer, 6% Nonamer, 2,7 Gew.-% Decamer, 0,7 Gew.-% Undecamer).

Bei dem verwendeten Isobuten-Oligomeren handelt es sich um das Destillat der Herstellung von Polyisobuten aus Isobuten unter $BF_3$-Katalyse gemäß Beispiel 2 der US-A 5 286 823. Das Oligomer wies laut GC-MS ein zahlenmittleres Molekulargewicht $\bar{M}_N$ von 202 und eine Dispersizität $\bar{M}_w/\bar{M}_N$ von 1,05 auf (47,3 Gew.-% Trimer, 31,7 Gew.-

% Tetramer, 14,5 Gew.-% Pentamer, 5,1 Gew.-% Hexamer, 1,4 Gew.-% Heptamer).

Herstellung der Dimere

500 g Oligobuten-1-Destillat wurden mit 300 g n-Hexan verdünnt und durch Behandlung mit Molekularsieb 3 Å auf ein 1 ppm Wasser abgereichert. Diese Lösung wurde in einem 1 l-Doppelmantelkolben mit 3,7 g 2-Butanol versetzt und auf -30°C abgekühlt. In diese Lösung leitete man innerhalb 30 min bei -30°C 3,4 g Bortrifluorid und behielt diese Temperatur weitere 30 min bei. Anschließend erwärmte man auf 20°C, gab 250 g vollentsalztes Wasser zu und beließ die Lösung weitere 15 min. Dann wurde das Wasser abgetrennt und mit insgesamt 500 g vollentsalztem Wasser nachgewaschen, und die organische Phase destilliert. Bei einer Sumpftemperatur von 230°C und einem Druck von 2 mbar blieben 395 g des gewünschten Polyolefins im Destillationsrückstand. Die Ergebnisse sind in Tabelle 1 zusammengefaßt.

Beispiel 2

Das Destillat der Propenoligomerisierung (s.o.) wurde analog Beispiel 1 umgesetzt. Im Destillationsrückstand verblieben 380 g Polyolefin. Die Ergebnisse sind in Tabelle 1 zusammengefaßt.

Beispiel 3

Oligomeres Isobuten (s.o.) wurde analog Beispiel 1 umgesetzt. Im Destillationsrückstand verblieben 310 g Polyisobuten. Die Eigenschaften des Polyisobutens sind in Tabelle 1 zusammengefaßt.

Tabelle 1

| | Bsp 1 | | Bsp 2 | | Bsp 3 | |
|---|---|---|---|---|---|---|
| | Edukt | Produkt | Edukt | Produkt | Edukt | Produkt |
| $\overline{M}_N$ [Dalton] | 286 | 565 | 290 | 560 | 202 | 405 |
| $\overline{M}_w/\overline{M}_N$ | 1,07[3)] | 1,07[2)]/1,04[3)] | 1,02[3)] | 1,05[2)]/1,02[3)] | 1,05[3)] | 1,08[2)]/1,03[3)] |
| Vinyliden[1)] [%] | 99 | - | 99 | - | 65 | - |
| Bromzahl | - | 28 | - | 29 | - | 40 |
| Ausbeute [%] | - | 79 | - | 76 | - | 62 |

1) Anteil an Vinylidendoppelbindungen, nach $^{13}$C-NMR
2) Bestimmung mittels GPC (s.o.)
3) Bestimmt mittels GC (s.o.)

Herstellung der funktionalisierten Polyolefine

Beispiel 4

395 g Polybuten aus Beispiel 1, 100 g Dodecan und 5 g Cobaltoctacarbonyl werden in einem Autoklaven bei 280 bar $CO/H_2$ (1:1) 5 h auf 185°C erhitzt. Anschließend kühlt man auf Raumtemperatur ab, entfernt den Katalysator mit 400 ml 10%iger wäßriger Essigsäure und wäscht anschließend neutral.

Das erhaltene Oxoprodukt wird zusammen mit 0,1 1 Ammoniak sowie 300 g Ethanol und 100 g Raney-Cobalt in einem Autoklaven bei 200 bar Wasserstoff bei 180°C 5 h hydriert (reduktive Aminierung). Anschließend läßt man auf Raumtemperatur abkühlen und filtriert den Katalysator ab, verdampft über flüssiges Ammoniak und trennt das Lösungsmittel destillativ ab. Es verbleiben 333 g des Aminfunktionalisierten Polybutens in 417 g Rückstand.

Die Funktionalisierungsausbeute der Hydroformylierung lag bei 85%, die Konvertierung des Oxoprodukts zu Aminen bei 94%. Die Aminzahl des funktionalisierten Polybutens lag bei 51. Der Anteil an primärem Amin betrug 35 Gew.-%, an sekundärem Amin 52 Gew.-% und an tertiärem Amin 13 Gew.-%. Die Ergebnisse der motorischen Prüfung sind in Tabelle 2 zusammengefaßt.

Beispiel 5

380 g Destillationsrückstand aus Beispiel 3 wurden in Gegenwart von 6 g Cobaltoctacarbonyl analog Beispiel

4 hydroformyliert und anschließend reduktiv aminiert.

Die Funktionalisierungsausbeute der Hydroformylierung lag bei 86%, die Konvertierung des Oxoprodukts zu den Aminen bei 95%. Die Aminzahl des funktionalisierten Polypropens lag bei 72. Der Anteil an primärem Amin betrug 33 Gew.-%, an sekundärem Amin 51 Gew.-% und an tertiärem Amin 16 Gew.-%. Die Ergebnisse der motorischen Prüfung sind in Tabelle 2 zusammengefaßt.

Beispiel 6

310 g Destillationsrückstand aus Beispiel 3 wurden in 62 g Dodecan gelöst und analog Beispiel 5 hydroformyliert. Anschließend führte man eine Nachhydrierung in Gegenwart von Raney-Nickel bei einem Wasserstoffdruck von 190 bar und einer Temperatur von 190 °C durch. Die Funktionalisierungsausbeute der Hydroformylierung/Hydrierung lag bei 82%, die CO-Zahl < 0,5 und die OH-Zahl bei 111. Die erhaltene Lösung des hydrierten Produktes wurde mit 51 g Phthalsäureanhydrid in Gegenwart von 0,4 g Tetraisopropylorthotitanat zuerst 2 h bei 220°C und Normaldruck und anschließend 2 h bei 220°C (Badtemperatur) und 2 mbar Druck umgesetzt, wobei überschüssiges Dodecan abdestilliert wurde. Nach Fällung des Titanats mit Wasser und Filtration wurde restliches Dodecan bei 230°C und 2 mbar abdestilliert. Man erhielt 371 g Veresterungsprodukt. Der Ester hatte eine Esterzahl von 96 und eine Säurezahl < 1.

Beispiel 7

380 g Destillationsrückstand aus Beispiel 3 wurden in Gegenwart von 6 g Cobaltoctacarbonyl ($Co_2(CO)_8$) in 100 g Dodecan gemäß Beispiel 4 hydroformuliert. Der Gehalt an Wirksubstanz lag bei 65 % (Mischung aus Alkohol, Formiat des Alkohols, Aldehyd und etwas Carbonsäure).

Das hydroformulierte Gemisch wurde mit 3,8 g KOH versetzt und anschließend auf 130 °C erwärmt. Dann destillierte man im Vakuum etwa 50 g eines Dodekan/Wasser-Gemisches ab. Anschließend wurden 1160 g 1,2-Propenoxid aufgedrückt. Nach etwa 6 h war der Druck im Reaktionsgefäß auf etwa 2 bar abgefallen. Man kühlte auf 80 °C, entspannte und entfernte flüchtige Bestandteile durch dreimaliges Evakuieren und Belüften mit Stickstoff. Anschließend gab man 10 g sauren Ionenaustauscher zu, rührte 30 min und filtrierte über einen Filter mit einer Porenweite von 0,2 µm.

Die OH-Zahl des so erhaltenen Polyethers lag bei 32, das zahlenmittlere Molekulargewicht $\overline{M}_N$ (GPC) bei 1730 und die Dispersizität $\overline{M}_W/\overline{M}_N$ bei 1,22.

Beispiel 8

Der Polyether aus Beispiel 7 wurde gemäß Beispiel 4 einer Umsetzung mit Wasserstoff/Ammoniak in Gegenwart von Raney-Cobalt unterworfen (reduktive Aminierung). Die Aminzahl des Reaktionsprodukts lag bei 28.

Die Ergebnisse der motorischen Prüfung sind in Tabelle 2 zusammengefaßt.

Tabelle 2:

| Motorische Prüfung | | |
|---|---|---|
| Additiv | | Ablagerung mg |
| Bsp. | ppm | |
| - | - | 327 |
| 4 | 200 | 9 |
| 5 | 200 | 11 |
| 6 | 300 | 59 |
| 7 | 300 | 47 |
| 8 | 300 | 28 |

**Patentansprüche**

1. Polyolefin, erhalten durch katalytische Dimerisation von wenigstens einfach ungesättigten Olefin-Oligomeren, wobei es sich um Homo- oder Cooligomere von $C_3$-$C_6$-Olefinen handelt, die unter Propen, 1-Buten, i-Buten, 1-Penten, 2-Methylbuten, 1-Hexen, 2-Methylpenten, 3-Methylpenten oder 4-Methylpenten, gegebenenfalls in Kombination

mit Ethylen, ausgewählt sind, und wobei das Polyolefin ein zahlenmittleres Molekulargewicht im Bereich von 400 bis 1500 Dalton und eine Dispersizität $M_w/M_n$ < 1,2 aufweist und wenigstens einfach ethylenisch ungesättigt ist.

**2.** Polyolefin nach Anspruch 1, dadurch gekennzeichnet, daß die Olefin-Oligomere ein zahlenmittleres Molekulargewicht im Bereich von 200 bis 400 Dalton aufweisen.

**3.** Polyolefin nach einem der vorhergehenden Ansprüche, dadurch gekennzeichnet, daß wenigstens 50% der Olefinoligomere eine terminale Doppelbindung aufweisen.

**4.** Verfahren zur Herstellung eines Polyolefins nach einem der Ansprüche 1 bis 3, dadurch gekennzeichnet, daß man einfach ungesättigte Olefin-Oligomere mit einer Dispersizität $M_w/M_n$ < 1,4 in Gegenwart eines sauren Katalysators dimerisiert und den Katalysator nach Beendigung der Reaktion abtrennt.

**5.** Verfahren gemäß Anspruch 4, dadurch gekennzeichnet, daß es sich bei dem sauren Katalysator um $BF_3$ und/oder einen Komplex des $BF_3$ mit einer sauerstoffhaltigen Verbindung handelt.

**6.** Verfahren gemäß Anspruch 5, dadurch gekennzeichnet, daß es sich bei der sauerstoffhaltigen Verbindung um einen $C_1$-$C_8$-Alkohol handelt.

**7.** Verfahren gemäß einem der Ansprüche 4 bis 6, dadurch gekennzeichnet, daß die Dimerisierung bei Temperaturen im Bereich von 0 bis -100°C durchgeführt wird.

**8.** Funktionalisierte Polyolefine, erhältlich durch Funktionalisierung eines Polyolefins, erhalten durch katalytische Dimerisation von wenigstens einfach ungesättigten Olefin-Oligomeren, wobei das Polyolefin ein zahlenmittleres Molekulargewicht im Bereich von 400 bis 1500 Dalton und eine Dispersizität $M_w/M_n$ < 1,2 aufweist und wenigstens einfach ethylenisch ungesättigt ist, dadurch gekennzeichnet, daß das funktionalisierte Polyolefin folgende allgemeine Formel (I) besitzt:

$$R_i\text{-}X \qquad (I)$$

worin

R für den Polyolefinrest steht, i für eine ganze Zahl von 1 bis 4 und wenn i = 1,
x für eine funktionelle Gruppe der allgemeinen Formel (II)

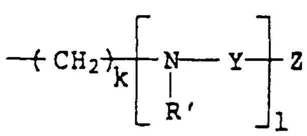

(II)

steht, worin
k und l unabhängig voneinander 0 oder 1 bedeuten,

R' für Wasserstoff, Alkyl, Hydroxyalkyl, Aminoalkyl, Cycloalkyl, Aryl, Aralkyl oder eine Gruppe -Y-Z steht,
-Y- eine Gruppe

$$-\left[Alk-O\right]_p-Alk'- \quad \text{oder} \quad -\left[Alk-N(R'')\right]_p-Alk'-$$

bedeutet, worin
Alk und Alk' gleich oder verschieden sind und für $C_2$-$C_4$-Alkylen stehen,
p für eine ganze Zahl von 0 bis 10 und
R'' für Wasserstoff, Alkyl oder Aryl steht, und
z ausgewählt ist unter

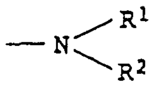 ; 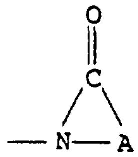 ; 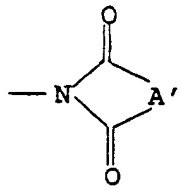 ; 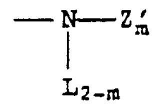

worin

| | |
|---|---|
| $R^1$ und $R^2$ | unabhängig voneinander für Wasserstoff, Alkyl, Cycloalkyl, Hydroxyalkyl, Aryl oder Aralkyl steht und sofern 1 = 0 auch für R und $-CH_2-R$ stehen kann, wobei R die oben angegebene Bedeutung besitzt, oder $R^1$ und $R^2$ zusammen mit dem Stickstoffatom, an das sie gebunden sind, einen gegebenenfalls substituierten Heterocyclus bilden, der gegebenenfalls ein weiteres Heteroatom, ausgewählt unter Sauerstoff und Stickstoff, enthält, |
| A | für $C_3$-$C_5$-Alkylen steht, das gegebenenfalls ein- oder mehrfach mit Alkyl, Cycloalkyl, Aryl, Heteroaryl, Aralkyl, oder Heteroaralkyl substituiert ist, |
| A' | für $C_2$-$C_4$-Alkylen, $C_2$-$C_4$-Alkenylen, die beide gegebenenfalls ein- oder mehrfach mit Alkyl, Cycloalkyl, Aryl, Heteroaryl, Aralkyl oder Heteroaralkyl substituiert sind, oder o-Arylen steht, |
| m | gleich 1 oder 2 ist, |
| L | für Wasserstoff, Alkyl, Aryl, Aralkyl, Heteroaryl oder Heteroaralkyl steht, und |
| Z' | ausgewählt ist unter |

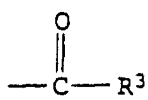 ; 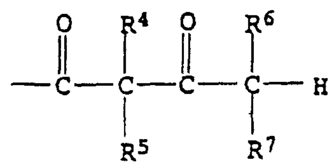 ;

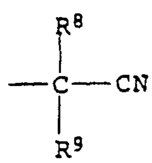 ; 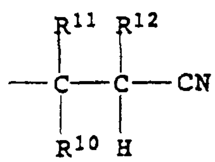 ; 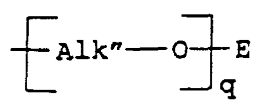

worin
$R^3$-$R^{12}$ unabhängig voneinander für Wasserstoff, Alkyl, Aryl, Heteroaryl, Aralkyl oder Heteroaralkyl stehen, q für eine Zahl von 1 bis 50 steht und Alk" für $C_2$-$C_4$-Alkylen, das gegebenenfalls hydroxysubstituiert ist, und E für Wasserstoff oder ein Esteräquivalent einer aliphatischen, aromatischen oder araliphatischen Mono-, Di-, Tri- oder Tetracarbonsäure steht;

oder X für eine funktionelle Gruppe der allgemeinen Formel (III)

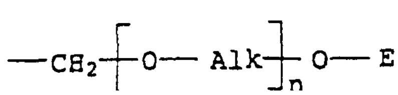 (III)

steht, worin
n eine ganze Zahl von 0 bis 50 ist,
Alk eine $C_2$-$C_4$-Alkyleneinheit bedeutet und
E eine der obengenannten Bedeutungen besitzt; oder X für eine funktionelle Gruppe der allgemeinen Formel (IIIb)

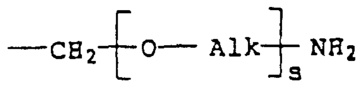 (IIIb)

steht, worin s für eine Zahl im Bereich von 1 bis 50 steht und Alk die zuvor genannte Bedeutung aufweist oder X für eine funktionelle Gruppe der allgemeinen Formel (IV)

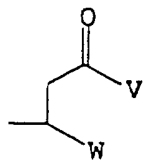 (IV)

steht, worin

- v für Alkyl, Aryl, Aralkyl, -O-$R^{13}$ oder -$NR^{14}R^{15}$ steht und $R^{13}$ bis $R^{15}$ unabhängig voneinander Wasserstoff, Alkyl, das gegebenenfalls auch durch ein oder mehrere, nicht benachbarte Sauerstoffatome unterbrochen ist und/oder auch $NH_2$-oder OH-Gruppen aufweisen kann, Cycloalkyl, Aryl, Aralkyl, Heteroaryl oder Heteroaralkyl bedeuten können,
- W für Wasserstoff, Alkyl, Cycloalkyl, Aryl, Aralkyl, Heteroaryl oder Beteroaralkyl, Alkylcarbonyl, Alkyloxycarbonyl, oder Alkylaminocarbonyl stehen kann oder V und W gemeinsam mit der Carbonylfunktion an V eine Gruppe

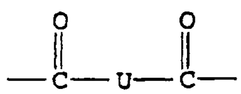

bilden, worin

- U für Sauerstoff oder $NR^{16}$ steht, wobei $R^{16}$ die für $R^{13}$-$R^{15}$ angegebenen Bedeutungen aufweisen kann;

oder wenn i für eine Zahl von 2 bis 4 steht X für eine Gruppe der allgemeinen Formel (V)

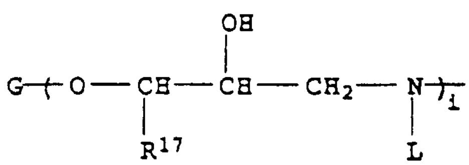 (V)

steht, worin G sich von einem di-, tri- oder tetravalenten aliphatischen Rest ableitet, L die obengenannte Bedeutung besitzt und $R^{17}$ für Wasserstoff oder $C_1$-$C_4$-Alkyl steht.

**9.** Funktionalisierte Polyolefine gemäß Anspruch 8 der allgemeinen Formel (VI)

$$R—CH_2—NR^aR^b \qquad (VI)$$

worin R die in Anspruch B angegebene Bedeutung besitzt und $R^a$ und $R^b$ unabhängig voneinander für Wasserstoff, Alkyl, das gegebenenfalls durch ein oder mehrere, nicht benachbarte Aminogruppen oder Sauerstoffatome unterbrochen ist, Cycloalkyl, das gegebenenfalls auch Heteroatome im Ring aufweisen kann, Aryl, Aralkyl, Beteroaryl oder Heteroaralkyl stehen können oder für $CH_2$-R steht.

**10.** Funktionalisierte Polyolefine gemäß Anspruch 8 der allgemeinen Formel (VII)

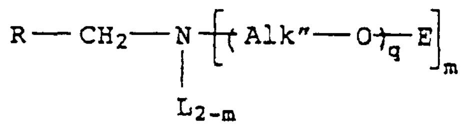 (VII)

worin R, L, E, m und g die zuvor genannten Bedeutungen besitzen und Alk" für 1,2-Ethylen, 1,2- bzw. 2,3-Propylen oder 1,2- bzw. 3,4-Butylen steht.

**11.** Funktionalisierte Polyolefine gemäß Anspruch 8 der allgemeinen Formel (VIII),

$$R—CH_2—O—E \qquad (VIII)$$

worin R und E die in Anspruch 8 angegebenen Bedeutungen besitzen.

**12.** Funktionalisierte Polyolefine gemäß Anspruch 8 der allgemeinen Formel XIV

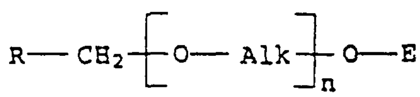 (XIV)

worin R, Alk und E die in Anspruch 8 angegebenen Bedeutungen besitzen und n für eine Zahl von 11 bis 50 steht.

**13.** Funktionalisierte Polyolefine gemäß Anspruch 8 der allgemeinen Formel XIVb

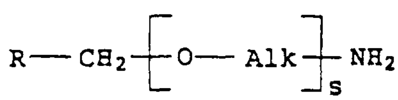 (XIVb)

worin R und Alk die in Anspruch 8 angegebenen Bedeutungen besitzen und s für eine Zahl im Bereich von 10 bis 40 steht.

**14.** Verwendung eines Polyolefins nach einem der Ansprüche 1 bis 3 und/oder eines funktionalisierten Polyolefins nach einem der Ansprüche 8 bis 13 als Kraft- oder Schmierstoffadditive.

**15.** Additivgemisch für Kraft- oder Schmierstoffe; enthaltend wenigstens eine Verbindung nach einem der Ansprüche 1 bis 3 und/oder 8 bis 13, gegebenenfalls in Kombination mit üblichen Kraft- oder Schmierstoffadditiven.

**16.** Schmierstoffzusammensetzung, umfassend in einem herkömmlichen flüssigen oder pastösen Schmierstoff wenigstens eine Verbindung gemäß einem der Ansprüche 1 bis 3 und/oder 8 bis 13 in einer Gesamtmenge von etwa 1 bis 15 Gew.-%, bezogen auf das Gesamtgewicht der Zusammensetzung, gegebenenfalls in Kombination mit weiteren Schmierstoffadditiven.

**17.** Kraftstoffzusammensetzung, umfassend in einem herkömmlichen Kraftstoff wenigstens eine Verbindung gemäß einem der Ansprüche 1 bis 3 und/oder 8 bis 13 in einer Gesamtkonzentration von etwa 20 bis 5000 mg/kg Kraftstoff, gegebenenfalls in Kombination mit weiteren üblichen Kraftstoffadditiven.

## Claims

**1.** A polyolefin obtained by catalytic dimerization of at least monounsaturated olefin oligomers, the olefin oligomers being homo- or cooligomers of $C_3$-$C_6$-olefins which are selected from propene, 1-butene, isobutene, 1-pentene, 2-methylbutene, 1-hexene, 2-methylpentene, 3-methylpentene or 4-methylpentene, if required in combination with

ethylene, and the polyolefin having a number average molecular weight of from 400 to 1500 dalton and a dispersity $M_w/M_n < 1.2$ and being at least monoethylenically unsaturated.

**2.** A polyolefin as claimed in claim 1, wherein the olefin oligomers have a number average molecular weight of from 200 to 400 dalton.

**3.** A polyolefin as claimed in any of the preceding claims, wherein at least 50% of the olefin oligomers have a terminal double bond.

**4.** A process for the preparation of a polyolefin as claimed in any of claims 1 to 3, wherein monounsaturated olefin oligomers having a dispersity $M_w/M_n < 1.4$ are dimerized in the presence of an acidic catalyst and the catalyst is separated off after the end of the reaction.

**5.** A process as claimed in claim 4, wherein the acidic catalyst is $BF_3$ or a complex of $BF_3$ with an oxygen-containing compound.

**6.** A process as claimed in claim 5, wherein the oxygen-containing compound is a $C_1$-$C_8$-alcohol.

**7.** A process as claimed in any of claims 4 to 6, wherein the dimerization is carried out at from 0 to -100°C.

**8.** A functionalized polyolefin obtainable by functionalizing a polyolefin obtained by catalytic dimerization of at least monounsaturated olefin oligomers, the polyolefin having a number average molecular weight of from 400 to 1500 dalton and a dispersity $M_w/M_n < 1.2$ and being at least monoethylenically unsaturated, wherein the functionalized polyolefin is of the following formula (I):

$$R_i\text{-}X \qquad \text{(I)}$$

where

R is the polyolefin radical, i is an integer from 1 to 4 and, when i is 1,

X is a functional group of the formula (II)

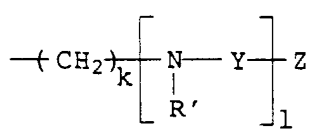

(II)

where
k and l, independently of one another, are each 0 or 1,

R' is hydrogen, alkyl, hydroxyalkyl, aminoalkyl, cycloalkyl, aryl, aralkyl or -Y-Z,
-Y- is a group

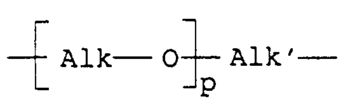

or

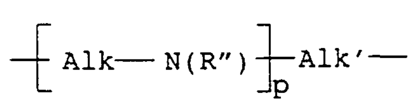

where
Alk and Alk' are identical or different and are each $C_2$-$C_4$-alkylene,
p is an integer from 0 to 10 and
R" is hydrogen, alkyl or aryl, and
Z is selected from amongst

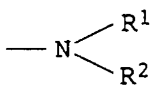 ; 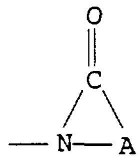 ; 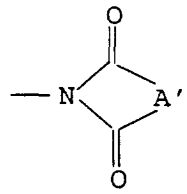 ; 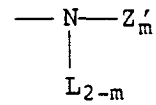

where

- $R^1$ and $R^2$ independently of one another, are each hydrogen, alkyl, cycloalkyl, hydroxyalkyl, aryl or aralkyl and, if 1 is 0, may also be R and $-CH_2-R$, where R has the abovementioned meanings, or $R^1$ and $R^2$, together with the nitrogen atom to which they are bonded, form an unsubstituted or substituted heterocyclic structure which may contain a further heteroatom selected from oxygen and nitrogen,
- A is $C_3$-$C_5$-alkylene which is unsubstituted or mono- or polysubstituted by alkyl, cycloalkyl, aryl, hetaryl, aralkyl, or hetaralkyl,
- A' is $C_2$-$C_4$-alkylene, or $C_2$-$C_4$-alkenylene, both of which are unsubstituted or mono- or polysubstituted by alkyl, cycloalkyl, aryl, hetaryl, aralkyl or hetaralkyl, or is o-arylene,
- m is 1 or 2,
- L is hydrogen, alkyl, aryl, aralkyl, hetaryl or hetaralkyl and
- Z' is selected from amongst

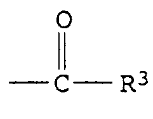 ; 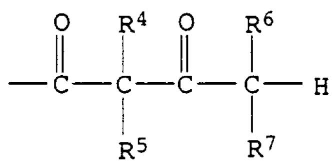 ;

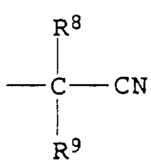 ; 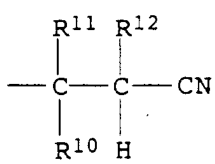 ; $-[Alk''-O]_q-E$

where
$R^3$-$R^{12}$, independently of one another, are each hydrogen, alkyl, aryl, hetaryl, aralkyl or hetaralkyl, q is from 1 to 50 and Alk" is $C_2$-$C_4$-alkylene which is unsubstituted or hydroxyl-substituted and E is hydrogen or one ester equivalent of an aliphatic, aromatic or araliphatic mono-, di-, tri- or tetracarboxylic acid;

or X is a functional group of the formula (III)

$$-CH_2-[O-Alk]_n-O-E \qquad (III)$$

where

n is an integer from 0 to 50,

Alk is a $C_2$-$C_4$-alkylene unit and
E has one of the abovementioned meanings;

or X is a functional group of the formula (IIIb)

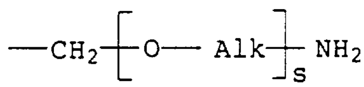 (IIIb)

where s is a number from 1 to 50 and Alk has the meaning given above
or X is a functional group of the formula (IV)

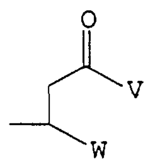 (IV)

where

V is alkyl, aryl, aralkyl, -O-$R^{13}$ or -$NR^{14}R^{15}$ and $R^{13}$ to $R^{15}$, independently of one another, may each be hydrogen, alkyl, which may furthermore be interrupted by one or more nonadjacent oxygen atoms or may also have $NH_2$- or OH-groups, or cycloalkyl, aryl, aralkyl, hetaryl or hetaralkyl,
W may be hydrogen, alkyl, cycloalkyl, aryl, aralkyl, hetaryl or hetaralkyl, alkylcarbonyl, alkyloxycarbonyl, or alkylaminocarbonyl, or V and W, together with the carbonyl function on V, form a group

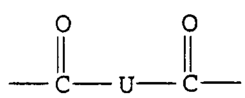

where

U is oxygen or $NR^{16}$ , where $R^{16}$ may have the meanings stated for $R^{13}$-$R^{15}$ ;

or, if i is from 2 to 4, X is a group of the formula (V)

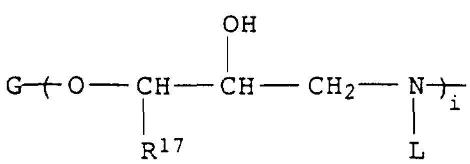 (V)

where G is derived from a di-, tri- or tetravalent aliphatic radical, L has the abovementioned meanings and $R^{17}$ is hydrogen or $C_1$-$C_4$-alkyl.

**9.** A functionalized polyolefin as claimed in claim 8, of the formula (VI)

$$R—CH_2—NR^aR^b \quad (VI)$$

where R has the meanings stated in claim 8 and $R^a$ and $R^b$ independently of one another, may be hydrogen, alkyl, which may be interrupted by one or more non-adjacent amino groups or oxygen atoms, cycloalkyl, which may also

have heteroatoms in the ring, aryl, aralkyl, hetaryl or hetaralkyl, or $CH_2$-R.

**10.** A functionalized polyolefin as claimed in claim 8, of the formula (VII)

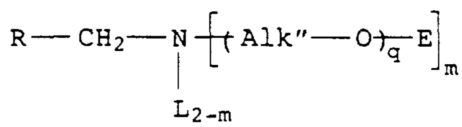

(VII)

where R, L, E, m and q have the abovementioned meanings and Alk" is 1,2-ethylene, 1,2- or 2,3-propylene or 1,2- or 3,4-butylene.

**11.** A functionalized polyolefin as claimed in claim 8, of the formula (VIII),

$$R—CH_2—O—E \qquad (VIII)$$

where R and E have the meanings as stated in claim 8.

**12.** A functionalized polyolefin as claimed in claim 8, of the formula XIV

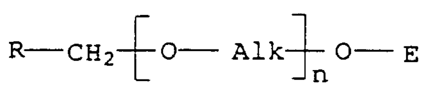

(XIV)

where R, Alk and E have the meanings as stated in claim 8 and n is a number from 11 to 50.

**13.** A functionalized polyolefin as claimed in claim 8, of the formula XIVb

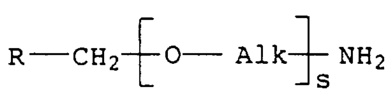

(XIVb)

where R and Alk have the meanings as stated in claim 8 and s is a number from 10 to 40.

**14.** The use of a polyolefin as claimed in any of claims 1 to 3 or of a functionalized polyolefin as claimed in any of claims 8 to 13 as a fuel additive or lubricant additive.

**15.** An additive mixture for fuels or lubricants, containing at least one compound as claimed in claims 1 to 3 or 8 to 13, if required in combination with conventional fuel or lubricant additives.

**16.** A lubricant composition comprising, in a conventional liquid or pasty lubricant, at least one compound as claimed in any of claims 1 to 3 or 8 to 13 in a total amount of from 1 to 15 % by weight, based on the total weight of the composition, if required in combination with further lubricant additives.

**17.** A fuel composition comprising, in a conventional fuel, at least one compound as claimed in any of claims 1 to 3 or 8 to 13, in a total concentration of from about 20 to 5000 mg/kg of fuel, if required in combination with further conventional fuel additives.

**Revendications**

**1.** Polyoléfine, obtenue par dimérisation catalytique d'oligomères oléfiniques ayant au moins une seule insaturation,

dans laquelle il s'agit d'homo- ou co-oligomères d'oléfines en $C_3$ à $C_6$, qui sont choisies parmi le propène, le 1-butène, le iso-butène, le 1-pentène, le 2-méthylbutène, le 1-hexène, le 2-méthylpentène, le 3-méthylpentène ou le 4-méthylpentène, éventuellement en combinaison avec l'éthylène, et la polyoléfine présente une masse moléculaire moyenne en nombre dans la plage de 400 à 1500 Daltons et une polymolécularité $M_m/M_n < 1,2$ et possédant au moins une insaturation éthylénique.

**2.** Polyoléfine selon la revendication 1, caractérisée en ce que les oligomères oléfiniques présentent une masse moléculaire moyenne en nombre dans la plage de 200 à 400 Daltons.

**3.** Polyoléfine selon l'une quelconque des revendications précédentes, caractérisée en ce que, au moins 50% des oligomères oléfiniques présentent une double liaison terminale.

**4.** Procédé de préparation d'une polyoléfine selon l'une quelconque des revendications 1 à 3, caractérisé en ce que l'on dimérise des oligomères oléfiniques à une seule insaturation ayant une polymolécularité $M_m/M_n < 1,4$ en présence d'un catalyseur acide et que l'on sépare le catalyseur après achèvement de la réaction.

**5.** Procédé selon la revendication 4, caractérisé en ce que, quant aux catalyseurs acides, il s'agit de $BF_3$ et/ou d'un complexe de $BF_3$ avec un composé contenant de l'oxygène.

**6.** Procédé selon la revendication 5, caractérisé en ce que, quant aux composés contenant de l'oxygène, il s'agit d'un alcool en $C_1$ à $C_8$.

**7.** Procédé selon l'une quelconque des revendications 4 à 6, caractérisé en ce que la dimérisation est réalisée à des températures dans la plage de 0 à -100°C.

**8.** Polyoléfines fonctionnalisées, que l'on peut obtenir par foncitonnalisation d'une polyoléfine, obtenue par dimérisation catalytique d'oligomères oléfiniques ayant au moins une insaturation, la polyoléfine présentant une masse moléculaire moyenne en nombre dans la plage de 400 à 1500 Daltons et une polymolécularité $M_m/M_n < 1,2$ et possédant au moins une insaturation éthylénique, caractérisées en ce que, la polyoléfine fonctionnalisée possède la formule générale suivante (I) :

$$R_i\text{-}X \qquad (I)$$

dans laquelle

R représente le résidu polyoléfine, i représente un nombre entier de 1 à 4 et lorsque i = 1,
x représente un groupe fonctionnel de formule générale (II)

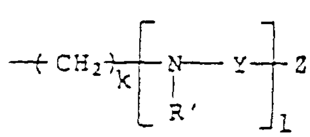

(II)

dans laquelle

k et l valent, indépendamment l'un de l'autre, 0 ou 1,

R' représente un atome d'hydrogène, un groupe alkyle, hydroxyalkyle, aminoalkyle, cycloalkyle, aryle, aralkyle ou un groupe -Y-Z,
-Y- représente un groupe

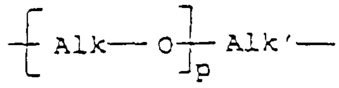 ou 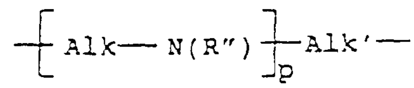

où

Alk et Alk' sont identiques ou différents et représentent un groupe alkylène en $C_2$ à $C_4$,

P représente un nombre entier de 0 à 10 et

R" représente un atome d'hydrogène, un groupe alkyle ou aryle, et

est choisi parmi

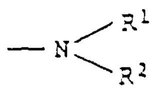 ; 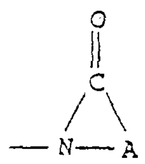 ; 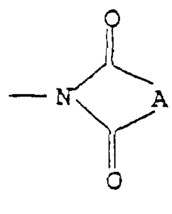 ; 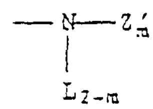

où

R¹ et R² représentent, indépendamment l'un de l'autre, un atome d'hydrogène, un groupe alkyle, cycloalkyle, hydroxyalkyle, aryle ou aralkyle et dans la mesure où l = 0, peuvent également représenter R et $-CH_2-R$, où R prend la signification précitée, ou bien $R^1$ et $R^2$ forment ensemble avec l'atome d'azote, auxquels ils sont liés, un hétérocycle éventuellement substitué, qui contient éventuellement un hétéroatome supplémentaire, choisi parmi l'atome d'oxygène et l'atome d'azote,

A représente un groupe alkylène en $C_3$ à $C_5$, qui est éventuellement mono- ou poly-substitué par un groupe alkyle, cycloalkyle, aryle, hétéroaryle, aralkyle ou hétéroaralkyle,

A' représente un groupe alkylène en $C_2$ à $C_4$, alcénylène en $C_2$ à $C_4$, qui sont tous deux éventuellement mono- ou poly-substitués par un groupe alkyle, cycloalkyle, aryle, hétéroaryle, aralkyle ou hétéroaralkyle, ou représente un groupe o-arylène,

m est égal à 1 ou 2,

L représente un atome d'hydrogène, un groupe alkyle, aryle, aralkyle, hétéroaryle ou hétéroaralkyle, et Z' est choisi parmi

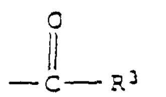 ; 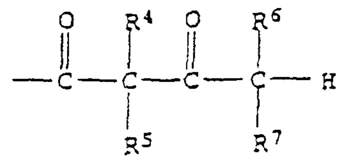 ;

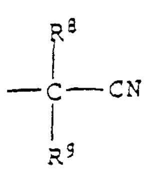 ; 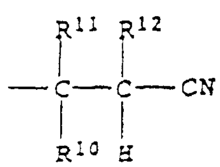 ; 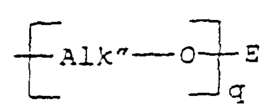

où

$R^3$ à $R^{12}$ représentent, indépendamment les uns des autres, un atome d'hydrogène, un groupe alkyle, aryle, hétéroaryle, aralkyle ou hétéroaralkyle,

q représente un nombre de 1 à 50 et Alk" un groupe alkylène en $C_2$ à $C_4$, qui est éventuellement à substitution hydroxy, et E représente un atome d'hydrogène ou un équivalent ester d'un acide mono-, di-, tri- ou tétra-carboxylique, aliphatique, aromatique ou araliphatique;

ou bien X représente un groupe fonctionnel de formule générale (III)

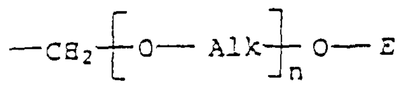 (III)

dans laquelle
n est un nombre entier de 0 à 50,
Alk représente un motif alkylène en $C_2$ à $C_4$, et
E prend une des significations précitées;
ou bien X représente un groupe fonctionnel de formule générale (IIIb)

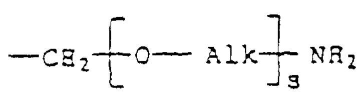 (IIIb)

dans laquelle s représente un nombre dans la plage de 1 à 50 et Alk prend la signification précitée
ou bien X représente un groupe fonctionnel de formule générale (IV)

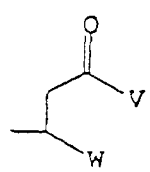 (IV)

dans laquelle

V représente un groupe alkyle, aryle, aralkyle, $-O-R^{13}$ ou $-NR^{14}R^{15}$ et $R^{13}$ à $R^{15}$ peuvent représenter, indépendamment les uns des autres, un atome d'hydrogène, un groupe alkyle, qui éventuellement est également interrompu par un ou plusieurs atomes d'oxygène non voisins et/ou peut comporter également des groupes $NH_2$ ou OH, un groupe cycloalkyle, aryle, aralkyle, hétéroaryle ou hétéroaralkyle,

w peut représenter un atome d'hydrogène, un groupe alkyle, cycloalkyle, aryle, aralkyle, hétéroaryle ou hétéroaralkyle, alkylcarbonyle, alkyloxycarbonyle ou alkylaminocarbonyle ou bien V et W forment ensemble avec la fonction carbonyle sur V un groupe

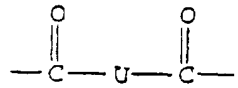

dans lequel

U représente un atome d'oxygène ou $NR^{16}$, $R^{16}$ pouvant prendre les significations indiquées pour $R^{13}$ à $R^{15}$;

ou lorsque i représente un nombre de 2 à 4, X représente un groupe de formule générale (V)

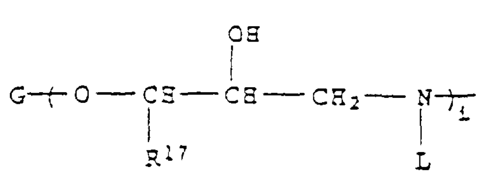 (V)

dans laquelle G est dérivé à partir d'un résidu aliphatique di-, tri- ou tétra-valent, L prend la signification précitée, et $R^{17}$ représente un atome d'hydrogène ou un groupe alkyle en $C_1$ à $C_4$.

**9.** Polyoléfines fonctionnalisées selon la revendication 8 de formule générale (VI)

$$R—CH_2—NR^aR^b \qquad (VI)$$

dans laquelle R prend la signification indiquée dans la revendication 8 et $R^a$ et $R^b$ peuvent représenter, indépendamment l'un de l'autre, un atome d'hydrogène, un groupe alkyle, qui est éventuellement interrompu par un ou plusieurs groupes amino ou atomes d'oxygène non voisins, un groupe cycloalkyle, qui éventuellement peut présenter également des hétéro-atomes dans le cycle, un groupe aryle, aralkyle, hétéroaryle ou hétéroaralkyle ou représente $CH_2—R$.

**10.** Polyoléfines fonctionnalisées selon la revendication 8 de formule générale (VII)

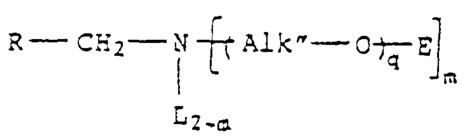

(VII)

dans laquelle R, L, E, m et q prennent les significations précitées et Alk" représente un groupe 1,2-éthylène, 1,2- ou 2,3-propylène ou 1,2- ou 3,4-butylène.

**11.** Polyoléfines fonctionnalisées selon la revendication 8 de formule générale (VIII)

$$R—CH_2—O—E \qquad (VIII)$$

dans laquelle R et E prennent les significations indiquées dans la revendication 8.

**12.** Polyoléfines fonctionnalisées selon la revendication 8 de formule générale (XIV)

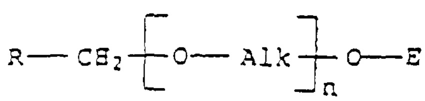

(XIV)

dans laquelle R, Alk, et E prennent les significations indiquées dans la revendication 8 et n représente un nombre de 11 à 50.

**13.** Polyoléfines fonctionnalisées selon la revendication 8 de formule générale XIVb

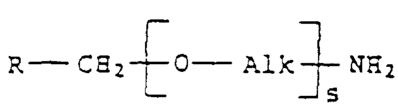

(XIVb)

dans laquelle R et Alk possèdent les significations indiquées dans la revendication 8 et s représente un nombre dans la plage de 10 à 40.

**14.** Utilisation d'une polyoléfine selon l'une quelconque des revendications 1 à 3 et/ou d'une polyoléfine fonctionnalisée selon l'une quelconque des revendications 8 à 13 en tant qu'additif de carburant ou de lubrifiant.

**15.** Mélange d'additifs pour carburants ou lubrifiants, contenant au moins un composé selon l'une quelconque des revendications 1 à 3 et/ou 8 à 13, éventuellement en combinaison avec des additifs habituels de carburant ou de lubrifiant.

**16.** Composition de lubrifiant, comprenant dans un lubrifiant liquide ou pâteux classique au moins un composé selon l'une quelconque des revendications 1 à 3 et/ou 8 à 13 en une quantité totale d'environ 1 à 15% en poids, par rapport au poids total de la composition, éventuellement en combinaison avec d'autres additifs de lubrifiant.

**17.** Composition de carburant, comprenant dans un carburant classique au moins un composé selon l'une quelconque des revendications 1 à 3 et/ou 8 à 13 dans une concentration totale d'environ 20 à 5000 mg/kg de carburant, éventuellement en combinaison avec d'autres additifs habituels de carburant.